# EUROPEAN PATENT APPLICATION

(11) **EP 4 835 553 A1**
(43) Date of publication of application: **04.11.2026**
(21) Application number: 24950816.9
(22) Date of filing: 08.08.2024
(51) Int. Cl.: G02F 1/1335, G02F 1/1333, G02F 1/13357

(54) **DISPLAY DEVICE**

(71) Applicant: LG Electronics Inc., Yeongdeungpo-gu Seoul 07336 (KR)
(72) Inventor: JUNG, Moongu, Seoul 06772 (KR); YOON, Jihye, Seoul 06772 (KR); HA, Seungsu, Seoul 06772 (KR); JUNG, Yongmin, Seoul 06772 (KR); SHIM, Seunghwan, Seoul 06772 (KR)
(74) Representative: Vossius & Partner Patentanwälte Rechtsanwälte mbB
(86) International application number: PCT/KR2024/011778
(87) International publication number: WO 2026/034666

(57) **Abstract**

A display device is provided. The display device according to the present disclosure may include: a display panel; a frame positioned behind the display panel; a main board coupled to the frame; a plurality of substrates disposed between the display panel and the frame, the plurality of substrates coupled to the frame; a plurality of light sources mounted on each of the plurality of substrates; a driver chip mounted on each of the plurality of substrates; an extension board electrically connected to the plurality of substrates; and a cable electrically connecting the main board to the extension board.

## Description

### TECHNICAL FIELD

The present disclosure relates to a display device.

### BACKGROUND ART

With the development of the information society, there have been growing demands for various types of display devices, and in order to meet these demands, various display devices, such as a liquid crystal display (LCD), a plasma display panel (PDP), an electroluminescent display (ELD), a vacuum fluorescent display (VFD), an organic light emitting diode (OLED), etc., have been studied and used recently.

Among these devices, the LCD panel includes a TFT substrate and a color substrate which are positioned opposite each other with a liquid crystal layer interposed therebetween, and displays an image by using light provided by a backlight unit.

Recently, many studies are being conducted on the structure of a substrate on which light sources, such as LEDs, are mounted. In addition, many studies are being conducted to improve the quality of an image displayed on a display panel.

### DETAILED DESCRIPTION OF INVENTION

### TECHNICAL PROBLEMS

It is an objective of the present disclosure to solve the above and other problems.

Another objective of the present disclosure may be to provide a structure capable of improving image quality by implementing a large number of local dimming blocks.

Another objective of the present disclosure may be to provide a structure capable of deleting an existing LED driver board.

Another objective of the present disclosure may be to provide a structure capable of minimizing the number of cables connecting a main board and LED substrates.

Another objective of the present disclosure may be to provide a display device including an LED substrate on which a driver IC is mounted.

Another objective of the present disclosure may be to provide an extension board including a processor connected to driver ICs of LED substrates.

Another objective of the present disclosure may be to provide various examples of the shape of LED substrates and the arrangement of driver ICs.

### TECHNICAL SOLUTION

In accordance with an aspect of the present disclosure for achieving the above and other objectives, a display device may include: a display panel; a frame positioned behind the display panel; a main board coupled to the frame; a plurality of substrates disposed between the display panel and the frame, the plurality of substrates coupled to the frame; a plurality of light sources mounted on each of the plurality of substrates; a driver chip mounted on each of the plurality of substrates; an extension board electrically connected to the plurality of substrates; and a cable electrically connecting the main board to the extension board.

### EFFECT OF INVENTION

The display device according to the present disclosure has the following effects.

According to at least one of the embodiments of the present disclosure, a structure may be provided in which image quality may be improved by implementing a large number of local dimming blocks.

According to at least one of the embodiments of the present disclosure, a structure may be provided in which an existing LED driver board may be deleted.

According to at least one of the embodiments of the present disclosure, a structure may be provided in which the number of cables connecting a main board and LED substrates may be minimized.

According to at least one of the embodiments of the present disclosure, a display device including an LED substrate, on which a driver IC is mounted, may be provided.

According to at least one of the embodiments of the present disclosure, an extension board including a processor connected to driver ICs of LED substrates may be provided.

According to at least one of the embodiments of the present disclosure, various examples of the shape of LED substrates and the arrangement of driver ICs may be provided.

Further scope of the applicability of the present disclosure will become apparent from the following detailed description. However, since various changes and modifications within the spirit and scope of the present disclosure are clearly understood by those skilled in the art, specific embodiments such as the detailed description and preferred embodiments of the present disclosure should be understood as being given merely as examples.

### BRIEF DESCRIPTION OF THE DRAWING

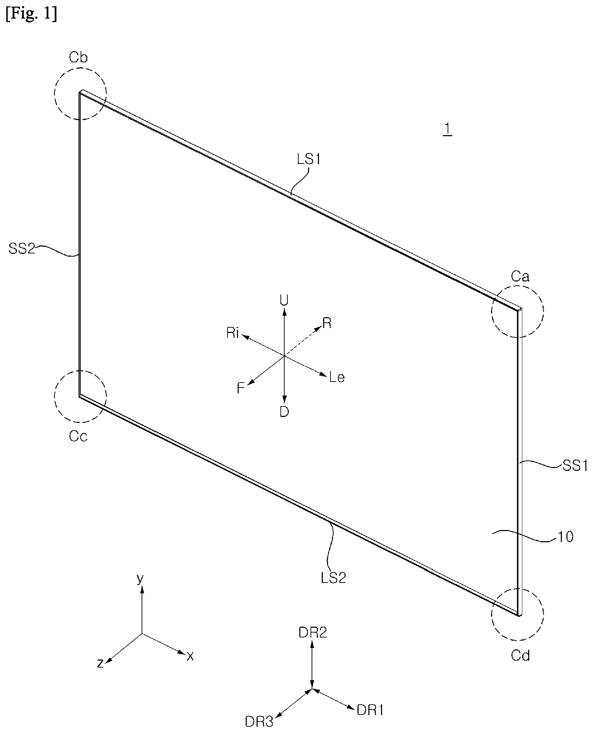

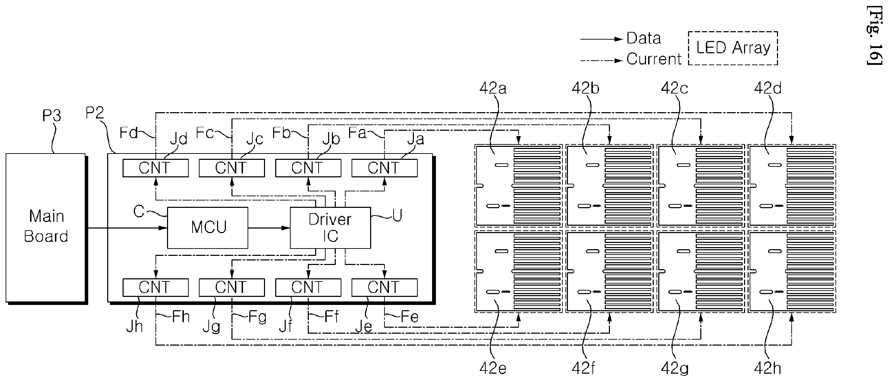

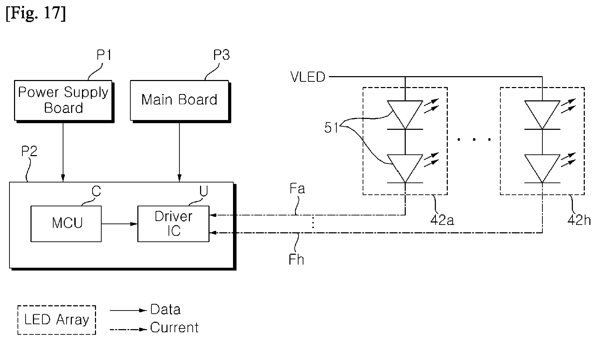

FIGS. 1 to 52 are diagrams illustrating examples of a display device according to embodiments of the present disclosure.

### MODE FOR CARRYING OUT THE INVENTION

Hereinafter, the present disclosure will be described in detail with reference to the accompanying drawings, in which the same reference numerals are used throughout the drawings to designate the same or similar components, and a redundant description thereof will be omitted.

The suffixes, such as "module" and "unit," for elements used in the following description are given simply in view of the ease of the description, and do not have a distinguishing meaning or role.

In addition, it will be noted that a detailed description of known arts will be omitted if it is determined that the detailed description of the known arts can obscure the embodiments of the present disclosure. Further, the accompanying drawings are used to help understand various technical features and the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

A singular representation may include a plural representation unless context clearly indicates otherwise.

It should be understood that the terms, "comprise," "include," "have," etc. when used in this specification, specify the presence of stated features, integers, steps, operations, elements, components, or combinations thereof but do not preclude the presence or addition of one or more other features, integers, steps, operations, elements, components, or combinations thereof.

References to directions, such as up (U), down (D), left (Le), right (Ri), front (F), and rear (R), shown in the drawings are provided merely for convenience of explanation and are not intended for limiting the scope of the present disclosure.

Referring to FIG. 1, a display device 1 includes a display panel 10. The display panel 10 may display an image.

The display device 1 includes a first long side LS1, a second long side LS2 opposite to the first long side LS1, a first short side SS1 adjacent to the first long side LS1 and the second long side LS2, and a second short side SS2 opposite to the first short side SS1. For convenience of explanation, it is illustrated and described that the first and second long sides LS1 and LS2 are longer than the first and second short sides SS1 and SS2, but it is also possible that lengths of the first and second long sides LS1 and LS2 are approximately equal to lengths of the first and second short sides SS1 and SS2.

A direction parallel to the long sides LS1 and LS2 of the display device 1 may be referred to as a left-right direction or a first direction DR1. The first short side SS1 may be referred to as a left side Le, x, and the second short side SS2 may be referred to as a right side Ri.

A direction parallel to the short sides SS1 and SS2 of the display device 1 may be referred to as an up-down direction or a second direction DR2. The first long side LS1 may be referred to as an upper side U, y, and the second long side LS2 may be referred to as a lower side D.

A direction perpendicular to the long sides LS1 and LS2 and the short sides SS1 and SS2 of the display device 1 may be referred to as a front-rear direction or a third direction DR3. A side on which the display panel 10 displays an image may be referred to as a front side F, z, and a side opposite thereto may be referred to as a rear side R.

The first long side LS1, the second long side LS2, the first short side SS1, and the second short side SS2 may be referred to as edges of the display device 1. Further, positions where the first long side LS1, the second long side LS2, the first short side SS1, and the second short side SS2 meet each other may be referred to as corners. A position where the first short side SS1 and the first long side LS1 meet each other may be referred to as a first corner Ca. A position where the first long side LS1 and the second short side SS2 meet each other may be referred to as a second corner Cb. A position where the second short side SS2 and the second long side LS2 meet each other may be referred to as a third corner Cc. A position where the second long side LS2 and the first short side SS1 meet each other may be referred to as a fourth corner Cd.

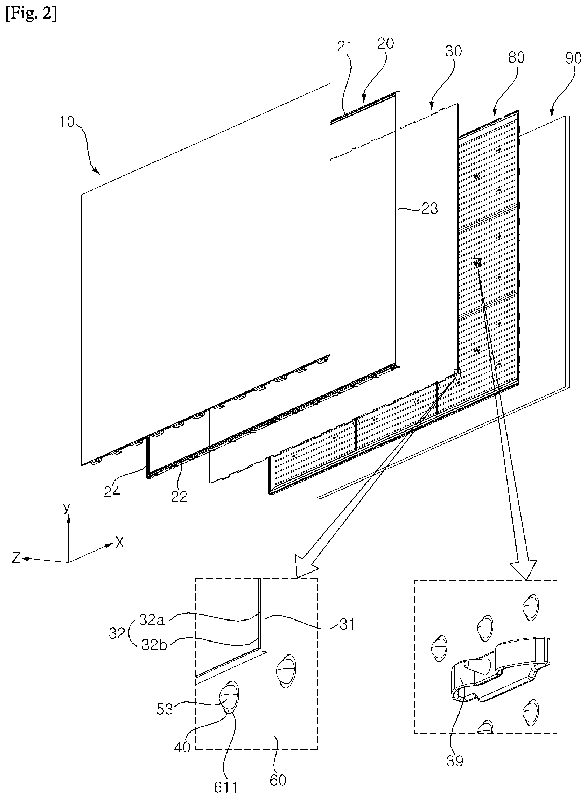

Referring to FIGS. 1 and 2, the display device 1 includes the display panel 10, a side frame 20, a backlight unit, a frame 80, and a back cover 90.

The display panel 10 may form a front surface of the display device 1 and display an image. Also, the display panel 10 may display an image by outputting red, green or blue (RGB) for each pixel by a plurality of pixels according to timing. The display panel 10 may be divided into an active area, in which the image is displayed, and a de-active area in which the image is not displayed. The display panel 10 may also include a front substrate and a rear substrate which are opposite each other with a liquid crystal layer sandwiched therebetween. The display panel 10 may be referred to as an LCD panel 10.

The front substrate may include a plurality of pixels made up of red (R), green (G), and blue (B) subpixels. The front substrate may also emit light corresponding to red, green, or blue color in response to a control signal.

The rear substrate may include switching elements. The rear substrate may switch on or off pixel electrodes. For example, the pixel electrode may change a molecular arrangement of a liquid crystal layer in response to a control signal received from the outside. The liquid crystal layer also includes liquid crystal molecules. The arrangement of the liquid crystal molecules may be changed depending on a voltage difference between the pixel electrode and a common electrode. The liquid crystal layer may transmit light, provided from the backlight unit, to the front substrate or may block the light.

The side frame 20 extends along the edges of the display panel 10. The side frame 20 covers the edges of the display panel 10. For example, the side frame 20 may include a plastic or metal material. The side frame 20 may also be referred to as a guide panel 20.

The backlight unit may be disposed at the rear of the display panel 10. The backlight unit may be disposed at the front of the frame 80 and may be coupled to the frame 80. The backlight unit may also be driven by a full driving scheme or a partial driving scheme such as local dimming, impulsive driving, or the like. The backlight unit may include light sources providing light to the front, a substrate 40 on which the light sources are mounted, lenses 53 covering the light sources, a reflective sheet 60 covering a front surface of the substrate 40, and an optical unit 30 located at the front of the reflective sheet 60.

The optical unit 30 may be opposite the display panel 10 with respect to the side frame 2. The optical unit 30 may evenly transmit the light from the light source to the display panel 10. The optical unit 30 may include a diffusion plate 31 and an optical sheet 32.

The diffusion plate 31 is disposed between the reflective sheet 60 and the optical sheet 32. The diffusion plate 31 may diffuse light from the light source. Further, an air gap may be formed between the reflective sheet 60 and the diffusion plate 31. The air gap may act as a buffer, and the light from the light source may be spread widely by the air gap. A supporter 39 is disposed between the reflective sheet 60 and the diffusion plate 31, and may be coupled to the reflective sheet 60 and support the diffusion plate 31.

The optical sheet 32 may also be adjacent to or in contact with a front surface of the diffusion plate 31. The optical sheet 32 may include at least one sheet. For example, the optical sheet 32 may include a plurality of sheets having different functions, and the plurality of sheets may be bonded or adhered to each other. For example, a first optical sheet 32a may be a diffusion sheet, and a second optical sheet 32b may be a prism sheet. The diffusion sheet may prevent light, emitted from the diffuser plate 31, from being partially concentrated, thereby making light distribution uniform. The prism sheet may collect light emitted from the diffusion sheet and provide the collected light to the display panel 10. The number and/or position of the diffusion sheet and the prism sheet may vary.

For example, the optical sheet 32 may change the wavelength or color of light provided by the light source. For example, the optical sheet 32 may include a red-based phosphor and/or a green-based phosphor. In this case, the light source may provide blue-based light, and the optical sheet 32 may convert the light from the light source into white light. Meanwhile, the optical sheet 32 may be referred to as a Quantum Dot (QD) Sheet.

The frame 80 may be located at the rear of the backlight unit. The display panel 10, the side frame 20, and the backlight unit may be coupled to the frame 80. The frame 80 may support the components of the display device described above and below. For example, the frame 80 may include a metal material such as an aluminum alloy and the like. The frame 80 may be referred to as a main frame 80, a module cover 80, or a cover bottom 80.

The back cover 90 may cover the rear of the frame 80 and may be coupled to the frame 80. For example, the back cover 90 may be an injection molded product made of a resin material. For example, the back cover 90 may include a metal material.

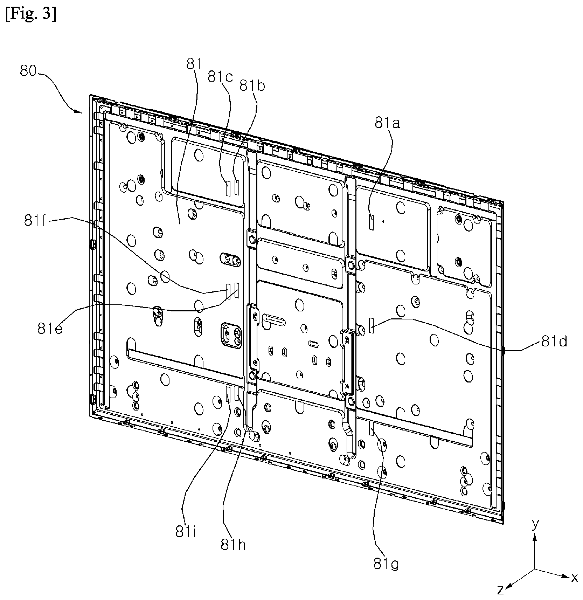

Referring to FIG. 3, a flat plate part 81 may define the front surface of the frame 80. A plurality of frame holes 81a, 81b, 81c, 81d, 81e, 81f, 81g, 81h, and 81i may be formed in the flat plate part 81.

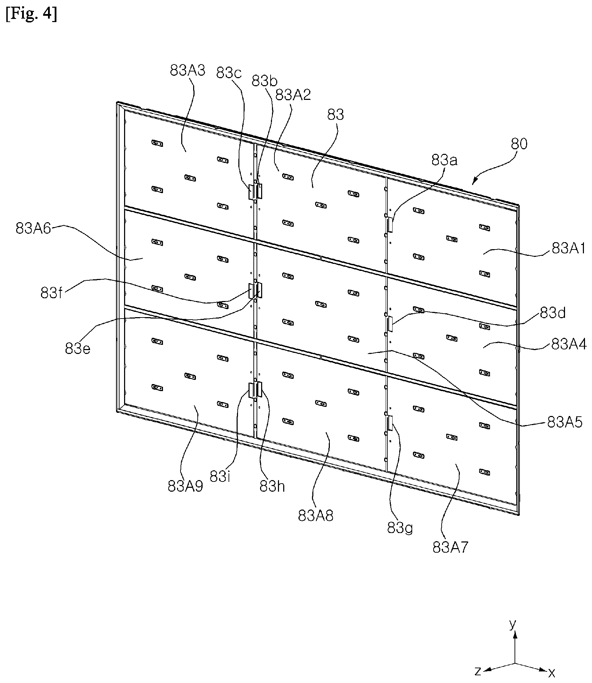

Referring to FIGS. 3 and 4, a heat sink 83 may cover a front surface of the flat plate part 81 and may be coupled to the flat plate part 81. A plurality of heat sink holes 83a, 83b, 83c, 83d, 83e, 83f, 83g, 83h, and 83i may be formed in the heat sink 83 and may be aligned with the plurality of frame holes 81a, 81b, 81c, 81d, 81e, 81f, 81g, 81h, and 81i. The heat sink 83 may be omitted.

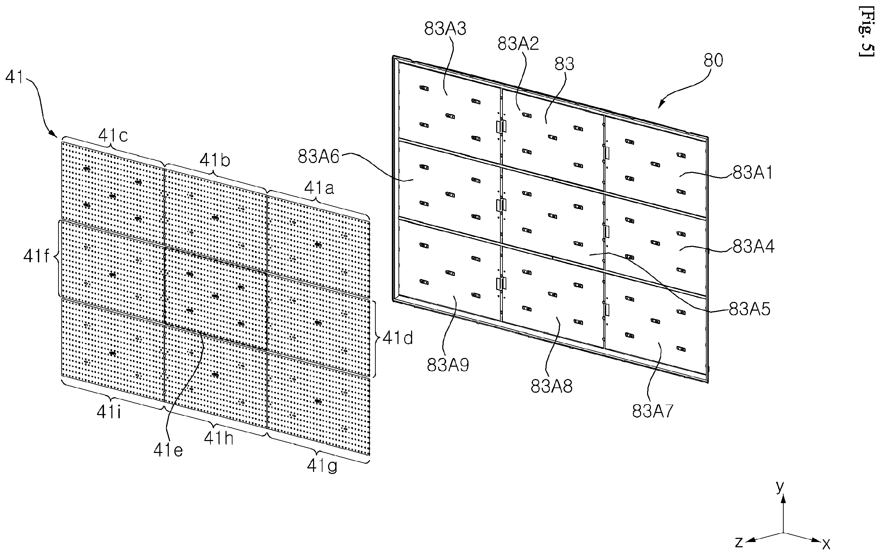

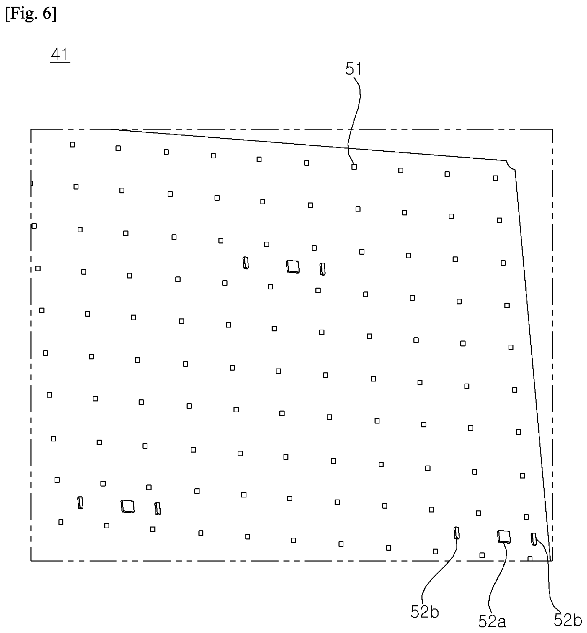

Referring to FIGS. 5 and 6, a substrate 41 may be coupled to the front surface of the frame 80 or the heat sink 83. The substrate 41 may be a printed circuit board (PCB). For example, the substrate 41 may be made of at least one of polyethylene terephthalate (PET), glass, polycarbonate (PC), and silicon. The substrate 41 may have a plate shape.

At least one substrate 41 may be provided. A plurality of substrates 41a, 41b, 41c, 41d, 41e, 41f, 41g, 41h, and 41i may respectively cover a plurality of regions 83A1, 83A2, 83A3, 83A4, 83A5, 83A6, 83A7, 83A8, and 83A9 of the heat sink 83.

A light source 51 may be mounted on a front surface of the substrate 41. A plurality of light sources 51 may be arranged in a matrix form on the front surface of the substrate 41. The light source 51 may be a light emitting diode (LED) chip or an LED package. The light source 51 may also be configured as a white LED or a colored LED emitting light of at least one of red, green, and blue color, and the like. The light source 51 may be a mini-LED. An electrode pattern may be formed on the substrate 41 and may connect an adapter (connector) and the light source 51. A power supply board supplies power to the light source 51 through the substrate 41. For example, the electrode pattern may be a carbon nano tube (CNT) electrode pattern.

An integrated element 52a and a capacitor 52b may be located around the light source 51 and may be mounted on the front surface of the substrate 41. The integrated element 52a may be an IC chip. A plurality of capacitors 52b may be opposite each other with respect to the integrated element 52a. The integrated element 52a may adjust power provided to a predetermined number of light sources 51.

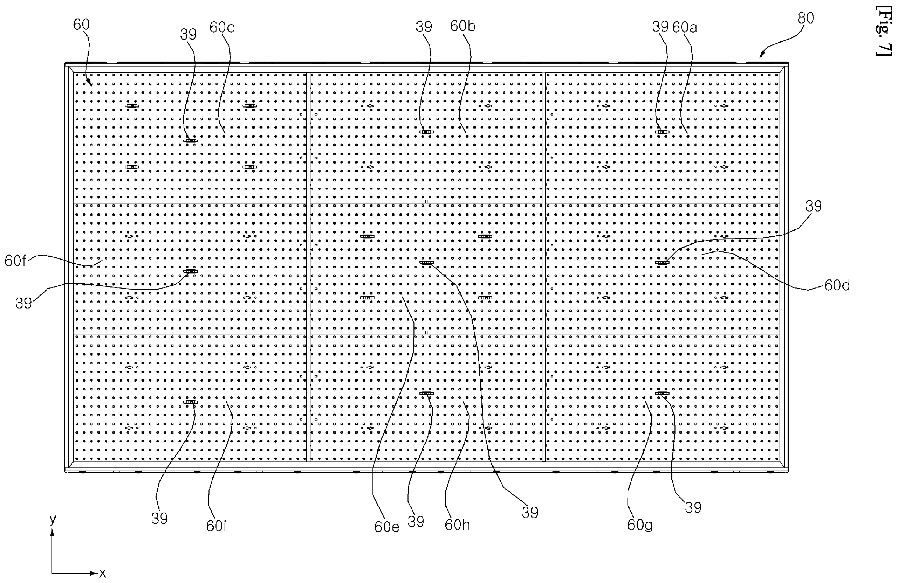

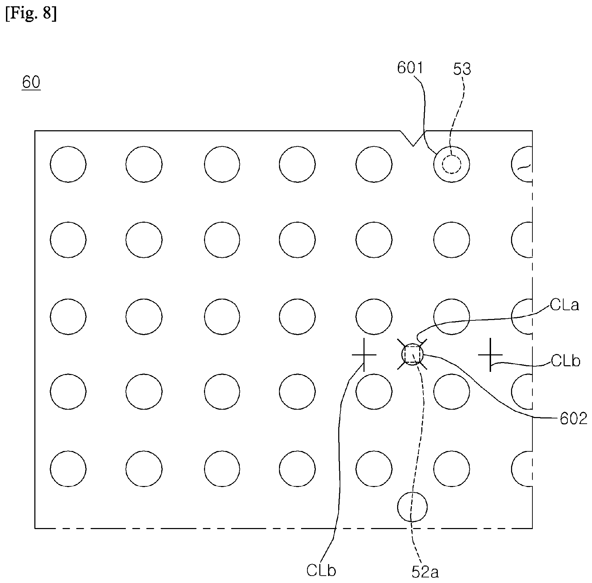

Referring to FIGS. 7 and 8, the reflective sheet 60 may be coupled to the front surface of the substrate 41 (see FIG. 5). The reflective sheet 60 may reflect light provided from the light source 51 or reflected from the diffusion plate 31 in a forward direction (see

FIG. 2). For example, the reflective sheet 60 may include a metal having a high reflectance such as at least one of aluminum (Al), silver (Ag), gold (Au), or titanium dioxide (TiO2), and/or a metal oxide. For example, resin may be deposited or coated on the reflective sheet 60. At least one reflective sheet 60 may be provided. A plurality of reflective sheets 60a, 60b, 60c, 60d, 60c, 60f, 60g, 60h, and 60i may cover the substrate(s) 41 (sec FIG. 5).

A hole 601 may be formed in the reflective sheet 60, and the light source 51 (see FIG. 6) or the lens 53 covering the light source 51 may be located in the hole 601. The diameter of the hole 601 may be larger than the diameter of the lens 53. The number of holes 601 may be equal to the number of light sources 51 or lenses 53.

An accommodation hole 602 may be formed in the reflective sheet 60, and the integrated element 52a (see FIG. 6) may be located in the accommodation hole 602. A first cutting line CLa around the accommodation hole 602 may be widened by the integrated element 52a. Cross-shaped second cutting lines CLb may be formed in the reflective sheet 60, and may face each other with respect to the first cutting line CLa. Capacitors 52b (see FIG. 6) may be located in the second cutting lines CLb, and the second cutting lines CLb may be widened by the capacitors 52b. Accordingly, the reflective sheet 60 may be adhered to the substrate 41, and light uniformity may be improved.

Meanwhile, the supporter 39 may pass through the reflective sheet 60 and the substrate 41 to be detachably coupled to the heat sink 83 and/or the frame 80 (see FIG. 5). A plurality of supporters 39 that are spaced apart from each other may be disposed on the reflective sheet 60. The front end of the supporter 39 may support the rear surface of the diffusion plate 31 (see FIG. 2).

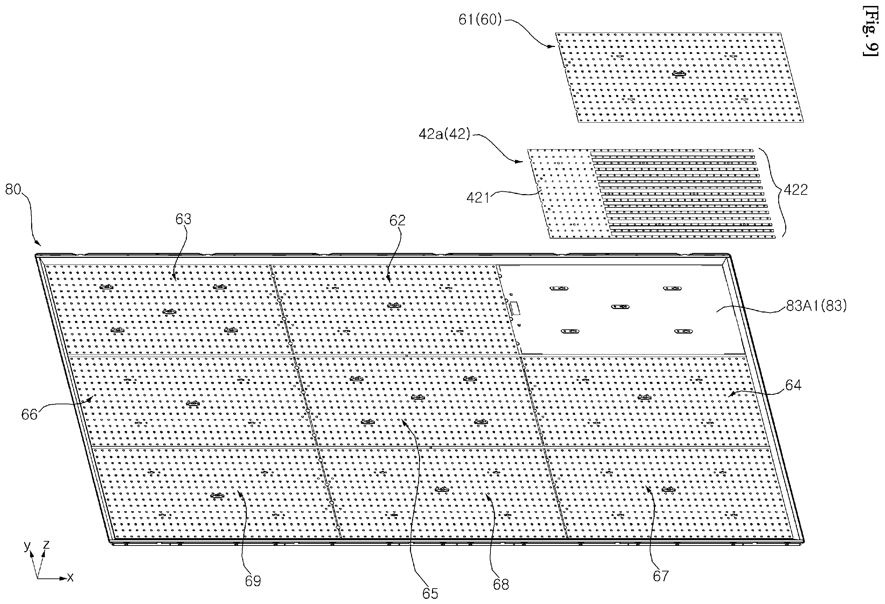

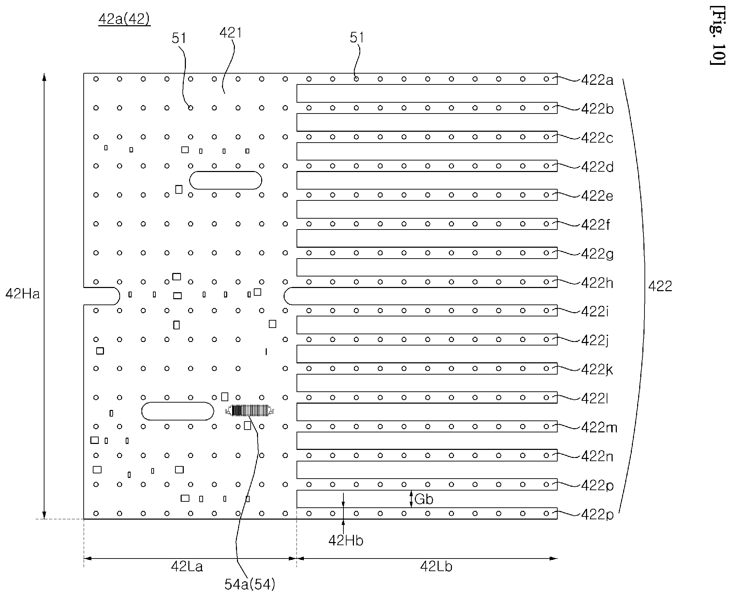

Referring to FIGS. 9 and 10, the substrate 42 may be coupled to the front surface of the frame 80 or the heat sink 83. The substrate 42 may be a Printed Circuit Board (PCB). For example, the substrate 42 may include at least one of polyethylene terephthalate (PET), glass, polycarbonate PC, and silicon. The substrate 42 may have a fork shape.

The substrate 42 may include a body 421 and legs 422. The body 421 may be elongated. The legs 422 may extend from one long side of the body 421 in a direction intersecting the body 421. The legs 422 may be referred to as arms 422. The length direction of the body 421 may be defined in a vertical direction, and the length direction of the legs 422 may be defined in a horizontal direction. The width 42La of the body 421 may be smaller than the length 42Ha of the body 421, and may be smaller than or similar to the length 42Lb of the legs 422. The legs 422 may be spaced apart from each other in the length direction of the body 421. The gap Gb between the legs 422 may be equal to the width 42Hb of the leg 422.

At least one substrate 42 may be provided. The plurality of substrates 42 may respectively cover the plurality of regions 83A1, 83A2, 83A3, 83A4, 83A5, 83A6, 83A7, 83A8, and 83A9 (see FIG. 4) of the heat sink 83.

The light source 51 may be mounted on the front surface of the substrate 42. The plurality of light sources 51 may be arranged in a matrix form on the front surface of the body 421 and the legs 422. The integrated device and capacitor may be located around the light source 51, and may be mounted on the front surface of the substrate 42. The reflective sheet 60 may be coupled to the front surface of the substrate 42 and may have a hole in which the light source 51 or a lens covering the light source 51 is located. The plurality of reflective sheets 60a, 60b, 60c, 60d, 60c, 60f, 60g, 60h, and 60i may cover the substrate(s) 42.

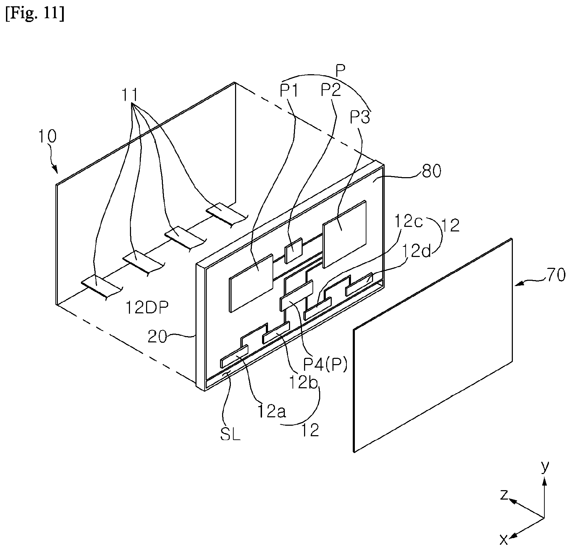

Referring to FIG. 11, a board P may be mounted on the frame 80. A plurality of electronic devices may be mounted on the board P. The board P may be a printed circuit board (PCB), and may be electrically connected to electronic components of the display device. A plurality of boards P may be coupled to the rear surface of the frame 80.

A power supply board P1 may supply power to each component of the display device. A Light Emitting Diode (LED) driver board P2 may be electrically connected to the power supply board Pl and a main board P3 through a cable, and may provide power and current to a substrate on which light sources, such as LEDs, are mounted. A main board P3 may control each component of the display device. A timing controller board P4 may be connected to the main board P3 through a cable, and may provide an image signal to the display panel 10. For example, the power supply board P1 may be adjacent to the left side of the frame 80, and the main board P3 may be adjacent to the right side of the frame 80. The LED driver board P2 may be located between the power supply board P1 and the main board P3, and the timing controller board P4 may be located below the LED driver board P2.

The cable 11 may be adjacent to the lower side of the display panel 10 and electrically connected to the display panel 10. The cable 11 may pass through a slit SL or hole formed in the frame 80. For example, the cable 11 may be a Chip On Film (COF).

A source PCB 12 may be adjacent to the lower side of the frame 80 and coupled to the rear surface of the frame 80, and may be electrically connected to the cable 11. For example, a plurality of source PCBs 12a, 12b, 12c, and 12d may be spaced apart from each other along the lower side of the frame 80, and may be electrically connected to a plurality of cables 11. A second source PCB 12b may be electrically connected to a first source PCB 12a through a first bridge cable (not numbered). A third source PCB 12c may be electrically connected to a fourth source PCB 12d through a second bridge cable (not numbered). The second source PCB 12b and the third source PCB 12c may be electrically connected to the timing controller board P4 through connecting cables (not numbered). For example, the first and second bridge cables and the connecting cables may be flexible flat cables (FFCs).

Accordingly, the timing controller board P4 may provide digital video data and a timing control signal to the display panel 10 through the source PCB 12.

The back cover 90 may be located at the rear of the frame 80, and may be coupled to the frame 80. The board P may be located between the frame 80 and the back cover 90, and may be covered by the back cover 90.

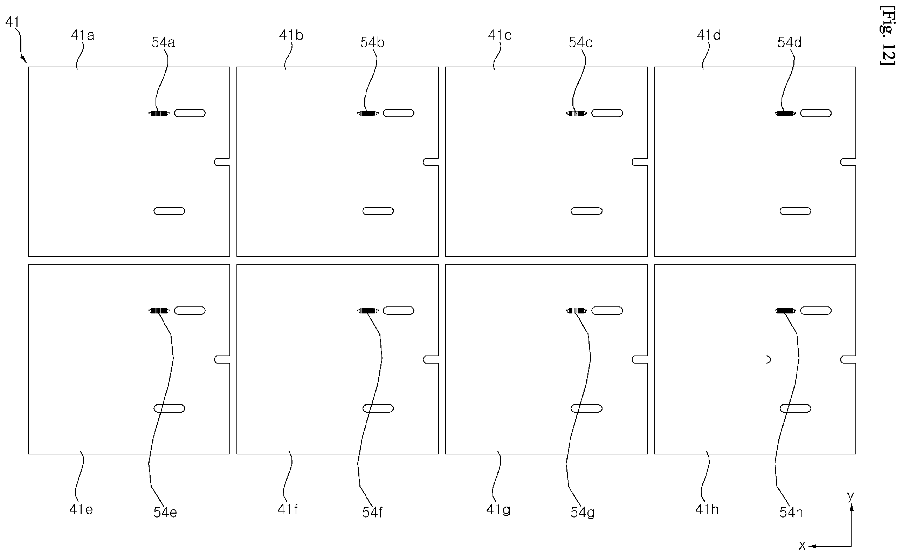

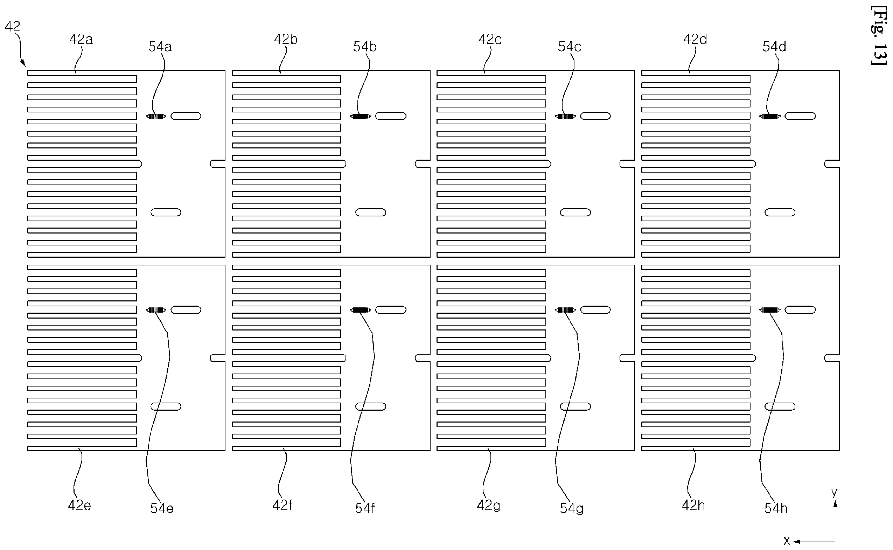

Referring to FIGS. 12 and 13, a plurality of connectors 54a, 54b, 54c, 54d, 54c, 54f, 54g, and 54h may be mounted on the rear surface of the plurality of substrates 41; 42. The number of connectors 54a, 54b, 54c, 54d, 54c, 54f, 54g, and 54h may be equal to the number of substrates 41; 42.

Referring to FIG. 12, each of the plurality of substrates 41a, 41b, 41c, 41d, 41e, 41g, and 41h may have a plate shape (see FIG. 5). A first connector 54a may be coupled to the rear surface of a first substrate 41a, and a second connector 54b may be coupled to the rear surface of a second substrate 41b. A third connector 54c may be coupled to the rear surface of a third substrate 41c, and a fourth connector 54d may be coupled to the rear surface of a fourth substrate 41d. A fifth connector 54e may be coupled to the rear surface of a fifth substrate 41e, and a sixth connector 54f may be coupled to the rear surface of a sixth substrate 41f. A seventh connector 54g may be coupled to the rear surface of a seventh substrate 41g, and an eighth connector 54h may be coupled to the rear surface of an eighth substrate 41h.

Referring to FIG. 13, each of the plurality of substrates 42a, 42b, 42c, 42d, 42c, 42f, 42g, and 42h may have a fork shape (see FIG. 9). The first connector 54a may be coupled to the rear surface of the body 421 of the first substrate 42a, and the second connector 54b may be coupled to the rear surface of the body 421 of the second substrate 42b. The third connector 54c may be coupled to the rear surface of the body 421 of the third substrate 42c, and the fourth connector 54d may be coupled to the rear surface of the body 421 of the fourth substrate 42d. The fifth connector 54e may be coupled to the rear surface of the body 421 of the fifth substrate 42e, and the sixth connector 54f may be coupled to the rear surface of the body 421 of the sixth substrate 42f. The seventh connector 54g may be coupled to the rear surface of the body 421 of the seventh substrate 42g, and the eighth connector 54h may be coupled to the rear surface of the body 421 of the eighth substrate 42h.

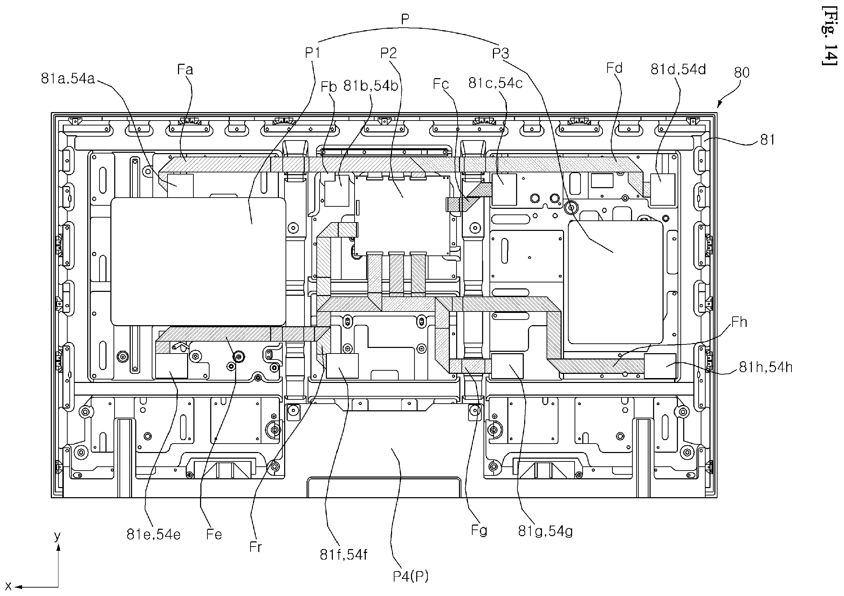

Referring to FIG. 14, the LED driver board P2 may be electrically connected to the connectors 54a, 54b, 54c, 54d, 54e, 54f, 54g, and 54h through cables Fa, Fb, Fc, Fd, Fe, Ff, Fg, and Fh. The cables Fa, Fb, Fc, Fd, Fe, Ff, Fg, and Fh may be Flexible Flat Cables (FFCs).

One end of a first cable Fa may be connected to a first connector Ja of the LED driver board P2, and the other end of the first cable Fa may be connected to the first connector 54a through the first frame hole 81a.

One end of a second cable Fb may be connected to a second connector Jb of the LED driver board P2, and the other end of the second cable Fb may be connected to the second connector 54b through a second frame hole 81b.

One end of a third cable Fc may be connected to a third connector Jc of the LED driver board P2, and the other end of the third cable Fc may be connected to the third connector 54c through a third frame hole 81c.

One end of a fourth cable Fd may be connected to a fourth connector Jd of the LED driver board P2, and the other end of the fourth cable Fd may be connected to the fourth connector 54d through a fourth frame hole 81d.

One end of a fifth cable Fe may be connected to a fifth connector Je of the LED driver board P2, and the other end of the fifth cable Fe may be connected to the fifth connector 54e through a fifth frame hole 81e.

One end of a sixth cable Ff may be connected to a sixth connector Jf of the LED driver board P2, and the other end of the sixth cable Ff may be connected to the sixth connector 54f through a sixth frame hole 81f.

One end of a seventh cable Fg may be connected to a seventh connector Jg of the LED driver board P2, and the other end of the seventh cable Fg may be connected to the seventh connector 54g through a seventh frame hole 81g.

One end of an eighth cable Fh may be connected to an eighth connector Jh of the LED driver board P2, and the other end of the eighth cable Fh may be connected to the eighth connector 54h through an eighth frame hole 81h.

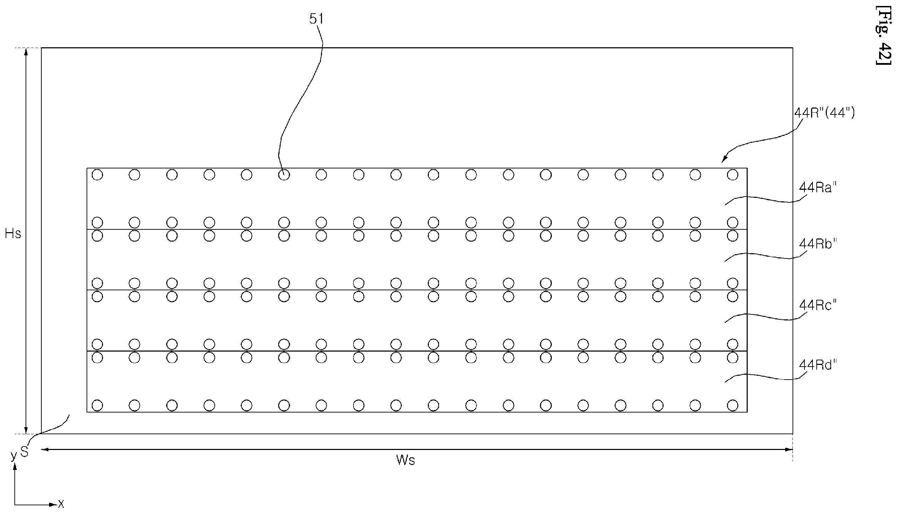

In order to connect the LED driver board P2 to the plurality of substrates (41, see FIG. 12; 42, see FIG. 13), cables Fa, Fb, Fc, Fd, Fe, Ff, Fg, and Fh may be required, the number of which is equal to the number of substrates 41; 42. As a large number of cables Fa, Fb, Fc, Fd, Fe, Ff, Fg, and Fh are required, the manufacturing cost of the display device may increase, and the connection structure between the LED driver board P2 and the substrates 41; 42 may become complicated.

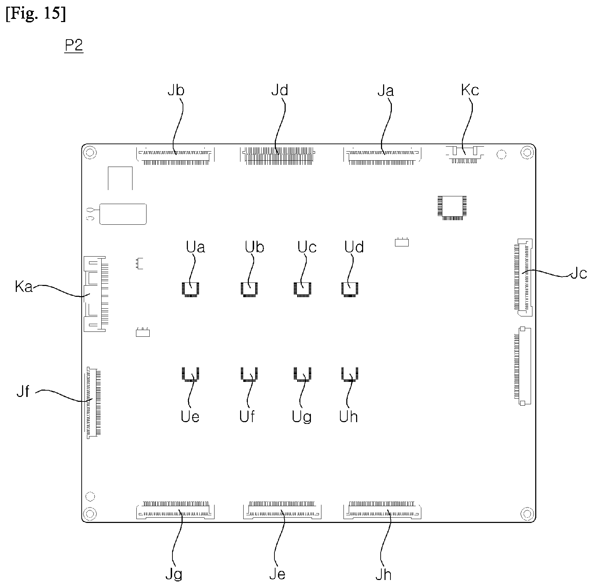

Referring to FIGS. 15 to 17, the LED driver board P2 may include a processor C, a power supply board connector Ka, a main board connector Kc, a plurality of connectors Ja, Jb, Jc, Jd, Je, Jf, Jg, and Jh, and a plurality of driver Integrated Circuits (ICs) Ua, Ub, Uc, Ud, Ue, Uf, Ug, and Uh.

The power supply board connector Ka may be electrically connected to the power supply board P1 through the cable (see FIG. 11). The main board connector Kc may be electrically connected to the main board P3 through a cable (see FIG. 11).

The processor C may be a Micro Controller Unit (MCU). The processor C may be referred to as a controller C or a control unit C. The processor C may convert (process) the data related to the image quality (e.g. brightness) of the light sources transmitted from the main board P3 and provide the data to a plurality of driver ICs Ua, Ub, Uc, Ud, Ue, Uf, Ug, and Uh.

The plurality of driver ICs Ua, Ub, Uc, Ud, Ue, Uf, Ug, Uh may be electrically connected to a plurality of substrates (41, see FIG. 12; 42, see FIG. 13) based on the data transmitted from the processor C.

The number of connectors Ja, Jb, Jc, Jd, Je, Jf, Jg, and Jh and the number of driver ICs Ua, Ub, Uc, Ud, Ue, Uf, Ug, and Uh may be equal to the number of substrates (41, see FIG. 12; 42, see FIG. 13). A driver IC may be referred to as a DIC, a driver IC, a driver chip, or a driver unit.

A first driver IC Ua may be electrically connected to the light sources (i.e., a first LED array) on the first substrate 41a; 42a through a first cable Fa connecting the first connector Ja of the LED driver board P2 and the first connector 54a (see FIGS. 12 and 13) of the first substrate 41a; 42a.

A second driver IC Ub may be electrically connected to the light sources (i.e., a second LED array) on the second substrate 41b; 42b through a second cable Fb connecting the second connector Jb of the LED driver board P2 and the second connector 54b (see FIGS. 12 and 13) of the second substrate 41b; 42b.

A third driver IC Uc may be electrically connected to the light sources (i.e., a third LED array) on the third substrate 41c; 42c through a third cable Fc connecting the third connector Jc of the LED driver board P2 and the third connector 54c (see FIGS. 12 and 13) of the third substrate 41c; 42c.

A fourth driver IC Ud may be electrically connected to the light sources (i.e. a fourth LED array) on the fourth substrate 41d; 42d through a fourth cable Fd connecting the fourth connector Jd of the LED driver board P2 and the fourth connector 54d (sec FIGS. 12 and 13) of the fourth substrate 41d; 42d.

A fifth driver IC Ue may be electrically connected to the light sources (i.e., a fifth LED array) on the fifth substrate 41e; 42e through a fifth cable Fe connecting the fifth connector Je of the LED driver board P2 and the fifth connector 54e (see FIGS. 12 and 13) of the fifth substrate 41e; 42e.

A sixth driver IC Uf may be electrically connected to the light sources (i.e., a sixth LED array) on the sixth substrate 41f; 42f through a sixth cable Ff connecting the sixth connector Jf of the LED driver board P2 and the sixth connector 54f (see FIGS. 12 and 13) of the sixth substrate 41f; 42f.

A seventh driver IC Ug may be electrically connected to the light sources (i.e., a seventh LED array) on the seventh substrate 41g; 42g through a seventh cable Fg connecting the seventh connector Jg of the LED driver board P2 and the seventh connector 54g (see FIGS. 12 and 13) of the seventh substrate 41g; 42g.

An eighth driver IC Uh may be electrically connected to the light sources (i.e., an eighth LED array) on the eighth substrate 41h; 42h through an eighth cable Fh connecting the eighth connector Jh of the LED driver board P2 and the eighth connector 54h (sec FIGS. 12 and 13) of the eighth substrate 41h; 42h.

Power VLED may be supplied from the power supply board P1 to the plurality of connectors 54a, 54b, 54c, 54d 54e, 54f, 54g, and 54 h (sec FIGS. 12 and 13 ) of the plurality of substrates 41a, 41b, 41c, 41d, 41e, 41f, 41g, and 41h; 42a, 42b, 42c, 42d, 42e, 42f, 42g, and 42h through the LED driver board P2 and the plurality of cables Fa, Fb, Fc, Fd, Fe, Ff, Fg, and Fh. The power VLED supplied to the plurality of connectors 54a, 54b, 54c, 54d 54e, 54f, 54g, and 54 h may be supplied to the light sources 51 of each of the plurality of substrates 41a, 41b, 41c, 41d, 41e, 41f, 41g, and 41h; 42a, 42b, 42c, 42d, 42e, 42f, 42g, and 42h. The current having passed through the light sources 51 may flow to each of the plurality of driver ICs Ua, Ub, Uc, Ud, Ue, Uf, Ug, and Uh (see FIG. 15) through each of the plurality of connectors 54a, 54b, 54c, 54d 54e, 54f, 54g, and 54 h and each of the plurality of cables Fa, Fb, Fc, Fd, Fe, Ff, Fg, and Fh.

The light sources 51 of each of the substrates 41a, 41b, 41c, 41d, 41e, 41f, 41g, and 41h; 42a, 42b, 42c, 42d, 42e, 42f, 42g, and 42h. may be grouped into a plurality of local dimming blocks. Each of the plurality of connectors 54a, 54b, 54c, 54d 54e, 54f, 54g, and 54 may include a power pin to which the power VLED is supplied, and block pins connected to the local dimming blocks and the driver IC. The power pin may be electrically connected to each local dimming block through a circuit on the substrate, and the block pins may also be electrically connected to each local dimming block through a circuit on the substrate. The number of block pins may be equal to the number of local dimming blocks. The driver IC may adjust the amount of current flowing to the light sources 51 belonging to each local dimming block between the power pin and the block pins, or may block the flow of current, thereby adjusting the light sources 51 belonging to each local dimming block, and as a result, implementing local dimming.

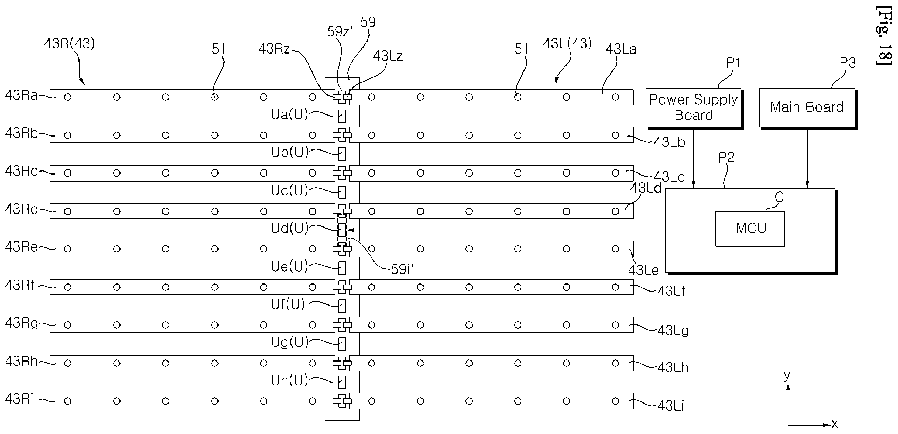

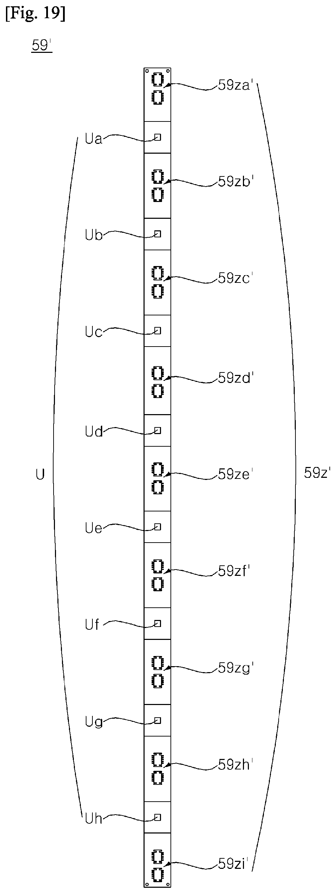

Referring to FIGS. 18 and 19, the substrate 43 may be coupled to the front surface of the frame 80 or the front surface of the heat sink 83 (see FIG. 4). The substrate 43 may be a printed circuit board (PCB) on which light sources, such as LEDs, are mounted. For example, the substrate 43 may include at least one of polyethylene terephthalate (PET), glass, polycarbonate (PC), and silicon. For example, the substrate 43 may have a bar shape. The substrate 43 may extend horizontally. Alternatively, the substrate 43 may extend vertically. A plurality of substrates 43 may be spaced apart from each other in a direction intersecting the length direction of the substrate 43.

An extension board 59' may extend in a direction intersecting the substrates 43. The extension board 59' may extend vertically. For example, the substrates 43 may extend from one long side of the extension board 59' in a direction (e.g., a horizontal direction) intersecting the extension board 59'. In another example, the substrates 43 may include first substrates 43L and second substrates 43R that are opposite each other with respect to the extension board 59'. The first substrates 43L and the second substrates 43R may be aligned or staggered with each other in the width direction of the extension board 59'.

Mounting connectors 59z' may be mounted to the extension board 59'. The mounting connectors 59z' may be attached to the front surface of the extension board 59' through Surface Mount Technology (SMT). The mounting connectors 59z' may be spaced apart from each other in the length direction of the extension board 59'.

First substrates 43La, 43Lb, 43Lc, 43Ld, 43Le, 43Lf, 43Lg, 43Lh, and 43Li may be adjacent to a first long side (e.g., left side) of the extension board 59', and may be electrically connected to the mounting connectors 59z' of the extension board 59' through the first connectors 43Lz.

Second substrates 43Ra, 43Rb, 43Rc, 43Rd, 43Re, 43Rf, 43Rg, 43Rh, and 43Ri may be adjacent to a second long side (e.g., right side) of the extension board 59', and may be electrically connected to the mounting connectors 59z' of the extension board 59' through the second connectors 43Rz.

Driver ICs U (integrated circuits) may be mounted on the extension board 59', rather than the LED driver board P2' on which the processor C is mounted. In the length direction of the extension board 59', driver ICs Ua, Ub, Uc, Ud, Ue, Uf, Ug, and Uh may be arranged alternately with mounting connectors 59za', 59zb', 59zc', 59zd', 59ze', 59zf', 59zg', 59zh', and 59zi'.

The light sources 51 may be disposed in a matrix form on the front surface of the substrates 43. The light sources 51 may be arranged in one row on each substrate 43. Alternatively, the light sources 51 may also be arranged in two or more rows on each substrate 43. An N number of light sources 51 of each substrate 43 may be grouped into a local dimming block. Here, N is a natural number greater than or equal to 1. For example, each of six light sources 51 of the first substrate 43Lz may form a local dimming block, or the six light sources 51 of the first substrate 43Lz may be grouped in pairs to form three local dimming blocks. The driver ICs Ua, Ub, Uc, Ud, Ue, Uf, Ug, and Uh may adjust the amount of current flowing to the light sources 51 of the substrates 43 or may block the flow of current, thereby adjusting the brightness of the light source(s) 51 belonging to each local dimming block, and as a result, implementing local dimming.

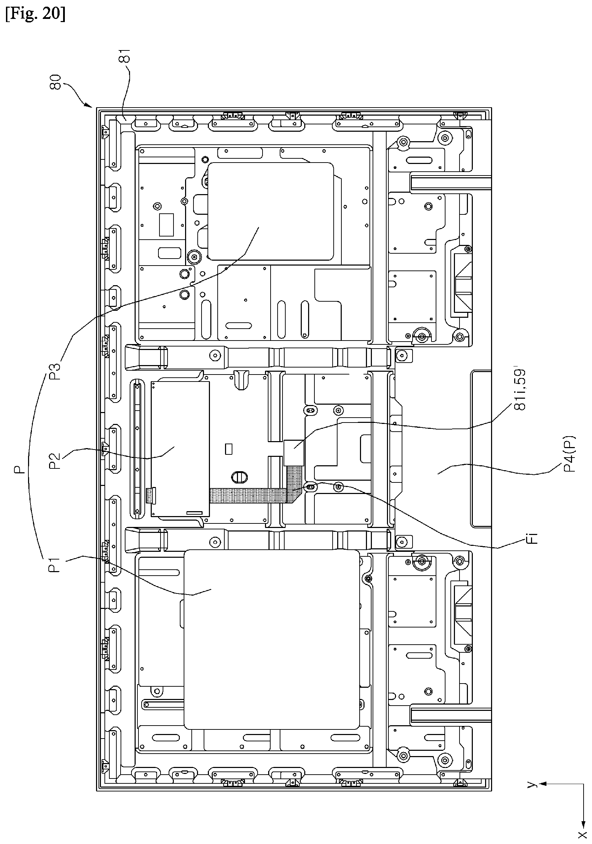

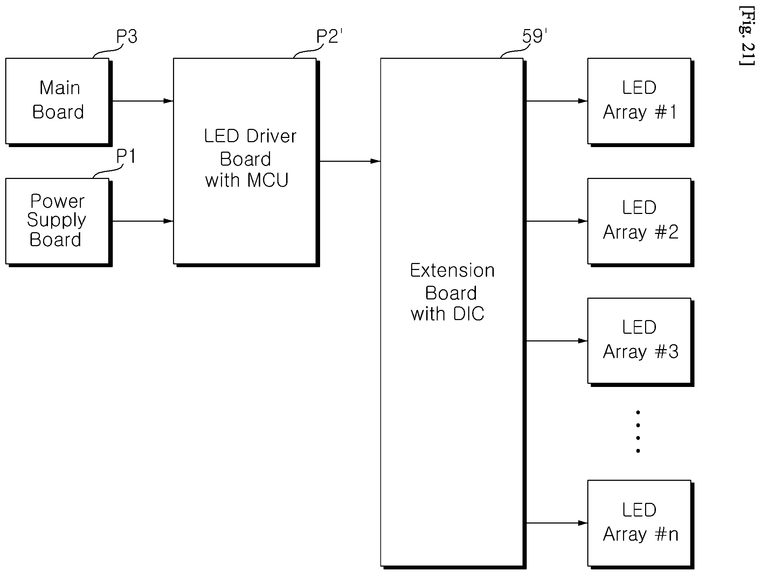

Referring to FIGS. 20 and 21, a power supply board Pl and a main board P3 may be electrically connected to the LED driver board P2' through a cable. A cable Fi may be electrically connected to a connector Ji of the LED driver board P2'. The cable Fi may be electrically connected to a connector 59i' (see FIG. 18) on a rear surface of the extension board 59' through a hole 81i. The number of cables Fi may be equal to the number of extension boards 59'. One cable Fi may connect the LED driver board P2' to one extension board 49'. The cable Fi may be a Flexible Flat Cable (FFC).

Accordingly, the processor C of the LED driver board P2' may be electrically connected to the ICs U (i.e., DICs) of the extension board 59' through the cable Fi. The processor C may be a Micro Controller Unit (MCU).

The processor C of the LED driver board P2' may convert (process) the data related to the image quality (e.g., brightness) of the light sources transmitted from the main board P3 and provide the data to the driver ICs U of the extension board 59'. The driver ICs U may adjust the brightness of the light sources 51 of the substrates 43 connected to the extension board 59'. The light sources 51 of each of the substrates 43 may be referred to as an LED array.

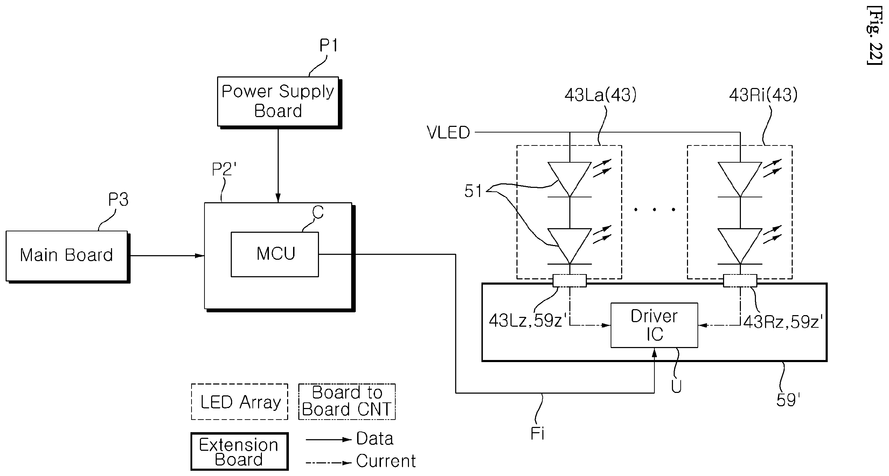

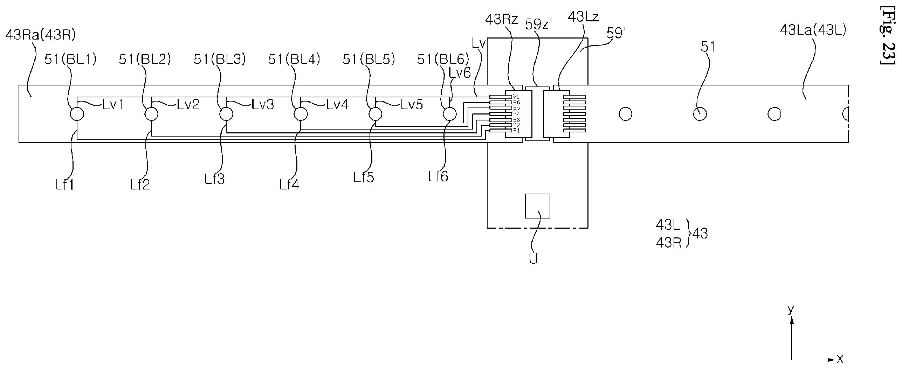

Referring to FIGS. 22 and 23, the power VLED may be supplied from the power supply board P1 to the connectors 43Lz and 43Rz of the substrates 43 through the LED driver board P2', the cable Fi, and the extension board 59'. The power VLED of each of the connectors 43Lz and 43Rz may be supplied to the light sources 51 of the respective substrates 43. The current having passed through the light sources 51 may flow to the driver IC U through each of the connectors 43Lz and 43Rz.

For example, six light sources 51 of the second substrate 43Ra may form six local dimming blocks BL1, BL2, BL3, BL4, BL5, and BL6. Lines Lv, Lf1, Lf2, Lf3, Lf4, Lf5, and Lf6 which will be described below may be circuits formed on the second substrate 43Ra.

A power line Lv may be connected to power VL of the second connector 43Rz and may be adjacent to the upper side of the second substrate 43Ra and disposed along the upper side thereof. The power line Lv may be branched into branch lines, the number of which corresponds to the number of local dimming blocks BL1, BL2, BL3, BL4, BL5, and BL6. A first branch line Lv1 may be connected to the light source 51 forming the first local dimming block BL1. A second branch line Lv2 may be connected to the light source 51 forming the second local dimming block BL2. A third branch line Lv3 may be connected to the light source 51 forming the third local dimming block BL3. A fourth branch line Lv4 may be connected to the light source 51 forming the fourth local dimming block BL4. A fifth branch line Lv5 may be connected to the light source 51 forming the fifth local dimming block BL5. A sixth branch line Lv6 may be connected to the light source 51 forming the sixth local dimming block BL6.

A first line Lf1 may connect the light source 51, connected to the first branch line Lv1, to a first pin B1 of the second connector 43Rz. A second line Lf2 may connect the light source 51, connected to the second branch line Lv2, to a second pin B2 of the second connector 43Rz. A third line Lf3 may connect the light source 51, connected to the third branch line Lv3, to a third pin B3 of the second connector 43Rz. A fourth line Lf4 may connect the light source 51, connected to the fourth branch line Lv4, to a fourth pin B4 of the second connector 43Rz. A fifth line Lf5 may connect the light source 51, connected to the fifth branch line Lv5, to a fifth pin B5 of the second connector 43Rz. A sixth line Lf6 may connect the light source 51, connected to the sixth branch line Lv6, to a sixth pin B6 of the second connector 43Rz.

The above power VL may be the power VLED transferred from the power supply board P1 to the second connector 43Rz through the LED driver board P2' and the extension board 59'. The pins B1, B2, B3, B4, B5, and B6 of the second connector 43Rz described above may be connected to the Driver IC U of the extension board 59'. The above lines Lf1, Lf2, Lf3, Lf4, Lf5, and Lf6 may be referred to as feedback lines Lf1, Lf2, Lf3, Lf4, Lf5, and Lf6.

The power VL may be supplied to the first local dimming block BL1 through the first branch line Lv1, and the current having passed through the first local dimming block BL1 may flow to the driver IC U through the first line Lf1 and the first pin B1. Likewise, the power VL may be supplied to each of the second to sixth local dimming blocks BL2, BL3, BL4, BL5, and BL6 through the second to sixth branch lines LV2, LV3, LV4, LV5, and LV6, respectively, and the current having passed through the second to sixth local dimming blocks BL2, BL3, BL4, BL5, and BL6 may flow to the driver IC U through each of the second to sixth lines Lf2, Lf3, Lf4, Lf5, and Lf6 and each of the second to sixth pins B2, B3, B4, B5, and B6. The driver IC U may adjust the amount of current flowing to the light sources 51 belonging to the respective local dimming blocks or may block the flow of current, thereby adjusting the brightness of the light sources 51 belonging to the respective local dimming blocks, and as a result, implementing local dimming.

In this case, the second connector 43Rz of the second substrate 43Ra may include the pins B1, B2, B3, B4, B5, and B6, the number of which corresponds to the number of the local dimming blocks BL1, BL2, BL3, BL4, BL5, and BL6 of the second substrate 43Ra. That is, as the number of the local dimming blocks increases, the number of pins of the second connector 43Rz also needs to increase accordingly. However, the width of the second substrate 43Ra or the width of the second connector 43Rz is limited, such that there may be a limitation in increasing the number of pins of the second connector 43Rz. In addition, the second connector 43Rz may not be commonly used for substrates including different numbers of local dimming blocks. In addition, the second connector 43Rz is provided at one end of the second substrate 43Ra, such that as the number of lines (circuits) of the second substrate 43Ra connected to the local dimming blocks increases, wiring for connecting the lines (circuits) to the second connector 43Rz may become difficult.

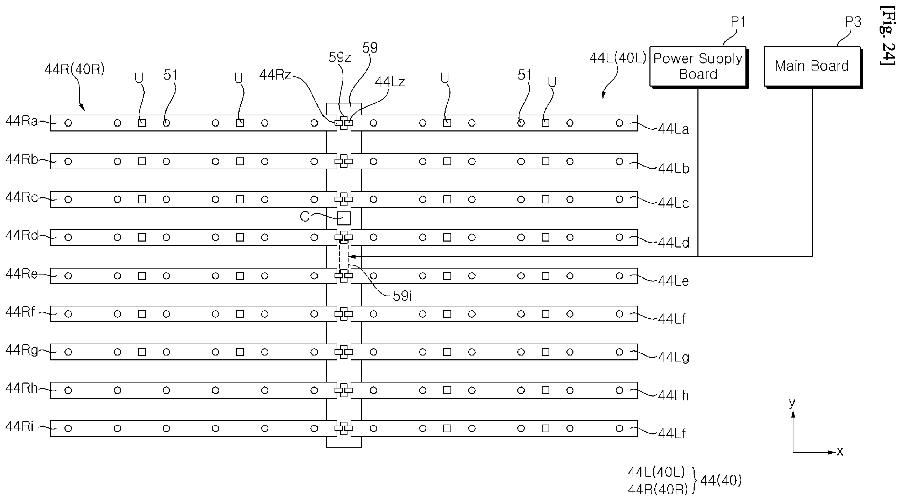

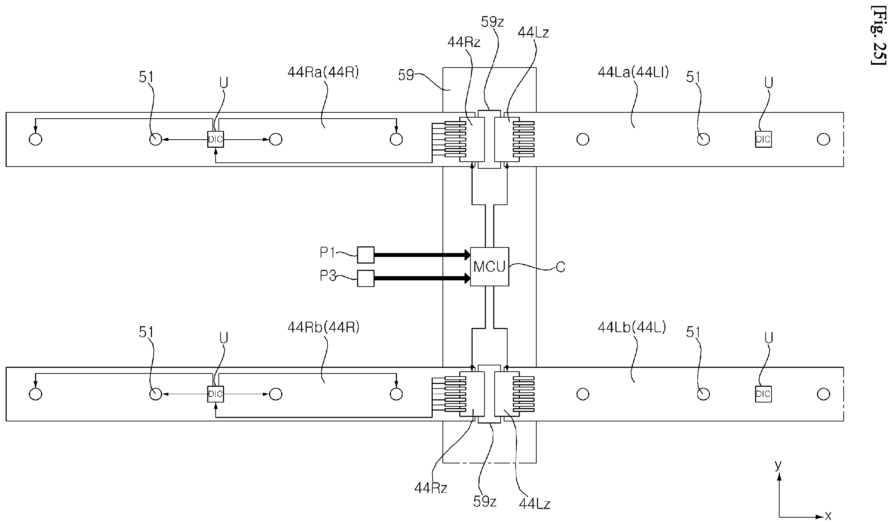

Referring to FIGS. 24 and 25, a substrate 44 may be coupled to the front surface of the frame 80 (see FIG. 3) or the front surface of the heat sink 83 (see FIG. 4). The substrate 44 may be a Printed Circuit Board (PCB) on which light sources, such as LEDs, are mounted. For example, the substrate 44 may include at least one of polyethylene terephthalate (PET), glass, polycarbonate (PC), and silicon. For example, the substrate 44 may have a bar shape. The substrate 44 may extend horizontally. Alternatively, the substrate 44 may extend vertically. A plurality of substrates 44 may be spaced apart from each other in a direction intersecting the length direction of the substrate 44. The substrate 44 may be referred to as the substrate 40.

An extension board 59 may extend in a direction intersecting the substrates 44. The extension board 59 may extend vertically. For example, the substrates 44 may extend from one long side of the extension board 59' in a direction (e.g., a vertical direction) intersecting the extension board 59'. In another example, the substrates 44 may include first substrates 44L and second substrates 44R that are opposite each other with respect to the extension board 59'. The first substrates 44L and the second substrates 44R may be aligned or staggered with each other in the width direction of the extension board 59'. The first substrates 44L may be referred to as the first substrates 40L, and the second substrates 44R may be referred to as the second substrates 40R.

Mounting connectors 59z may be mounted to the extension board 59. The mounting connectors 59z may be attached to the front surface of the extension board 59 through Surface Mount Technology (SMT). The mounting connectors 59z may be spaced apart from each other in the length direction of the extension board 59.

First substrates 44La, 44Lb, 44Lc, 44Ld, 44Le, 44Lf, 44Lg, and 44Lh may be adjacent to a first long side (e.g., left side) of the extension board 59 and may be electrically connected to the mounting connectors 59z of the extension board 59 through first connectors 44Lz.

Second substrates 44Ra, 44Rb, 44Rc, 44Rd, 44Re, 44Rf, 44Rg, and 44Rh may be adjacent to a second long side (e.g., right side) of the extension board 59 and may be electrically connected to the mounting connectors 59z of the extension board 59 through second connectors 44Rz.

The processor C may be mounted on the extension board 59. The processor C may be a Micro Controller Unit (MCU). The processor C may be referred to as a controller C or a control unit C. The driver ICs U (integrated circuits) may be mounted on the substrates 44. Each of the substrates 44 may include at least one driver IC U. The processor C may convert (process) the data related to the image quality (e.g. brightness) of the light sources transmitted from the main board P3 and provide the data to the driver ICs U. The driver ICs U may be electrically connected to the substrates 44 based on the data transmitted from the processor C. The driver IC U may be referred to as a DIC U, a driver chip U, a driver IC U, or a driver unit U.

The light sources 51 may be arranged in a matrix form on the front surface of the substrates 44. The light sources 51 may be arranged in one row on each substrate 44. Alternatively, the light sources 51 may also be arranged in two or more rows on each substrate 44. An N number of light sources 51 of each substrate 44 may be grouped into a local dimming block. Here, N is a natural number greater than or equal to 1. For example, each of six light sources 51 of the first substrate 44La may form a local dimming block, or the six light sources 51 of the first substrate 44La may be grouped in pairs to form three local dimming blocks. The driver ICs U may adjust the amount of current flowing to the light sources 51 of the substrates 44 or may block the flow of current, thereby adjusting the brightness of the light source(s) 51 belonging to each local dimming block, and as a result, implementing local dimming.

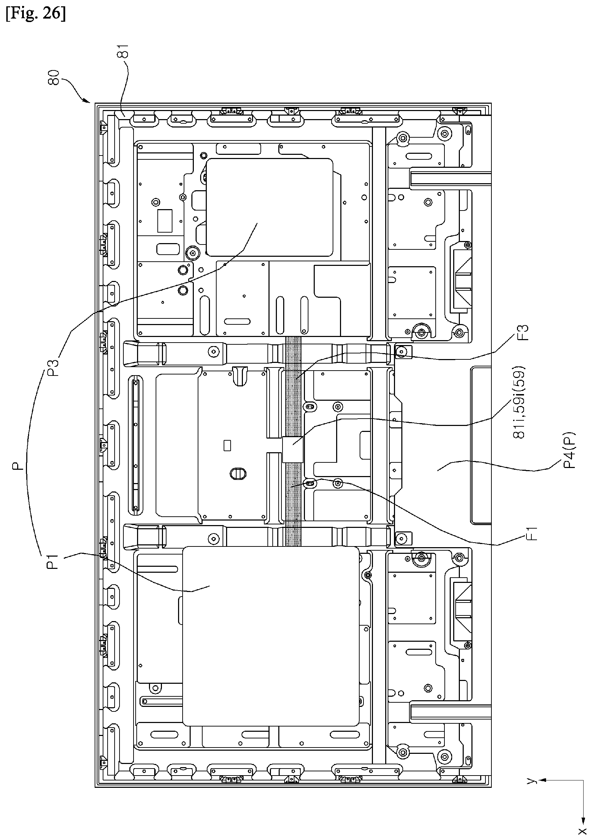

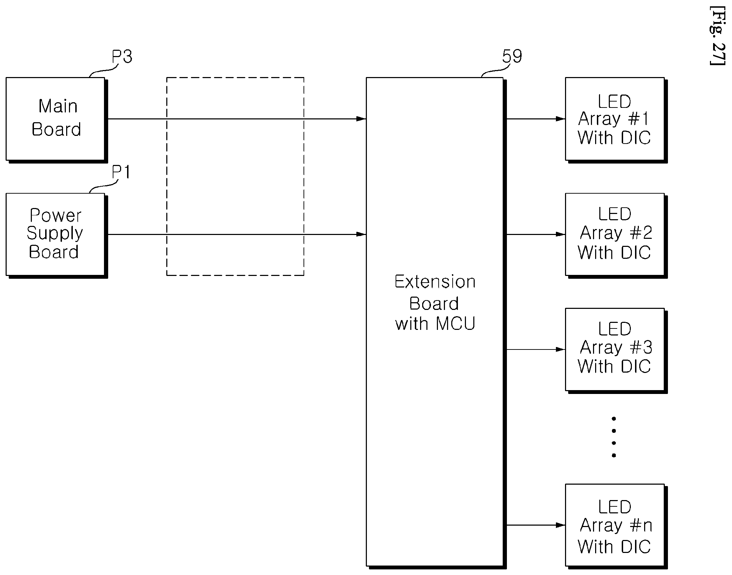

Referring to FIGS. 26 and 27, the power supply board P1 may be electrically connected to a cable F1, and the cable F1 may be electrically connected to a connector 59i of the extension board 59 through the hole 81i of the frame 80. The main board P3 may be electrically connected to a cable F3, and the cable F3 may be electrically connected to the connector 59i of the extension board 59 through the hole 81i of the frame 80. The connector 59i may be provided on a rear surface of the extension board 59. The extension board 59 may be connected to the power supply board P1 and the main board P3 through the two cables F1 and F3. Each of the cables F1 and F3 may be a Flexible Flat Cable (FFC).

Accordingly, the LED driver board may be omitted, thereby reducing the cost. Meanwhile, the processor C may be mounted on the main board P3 or the power supply board P1 instead of the extension board 59, and the LED driver may be omitted. In this case, the processor C of the main board P3 or the processor C of the power supply board P1 may be electrically connected to the extension board 59 through the cables F1 and F3 and may be electrically connected to the driver ICs connected to the extension board 59. The following description will be made based on the case where the processor C is mounted on the extension board 59, and the description thereof may also be applied to the case where the processor C is mounted on the main board P3 or the power supply board P1, as long as it is not required to be applied only to the case where the processor C is mounted on the extension board 59.

The processor C of the extension board 59, i.e., MCU, may be electrically connected to the driver ICs (i.e., DICs) of the substrates 44 connected to the extension board 59. The processor C of the extension board 59 may convert (process) the data related to the image quality (e.g. brightness) of the light sources transmitted from the main board P3 and provide the data to the driver ICs U. The driver ICs U may adjust the brightness of the light sources 51 of the substrates 44. The light sources 51 of each of the substrates 44 may be referred to as an LED array.

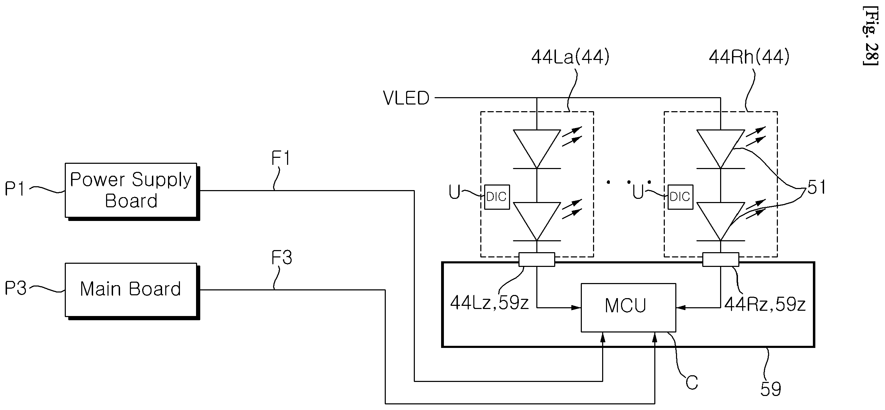

Referring to FIG. 28, the power VLED may be provided from the power supply board P1 to the connectors 44Lz and 44Rz of the substrates 44 through the cable F1 and the extension board 59. The power VLED of each of the connectors 44Lz and 44Rz may be provided to the light sources 51 of each of the substrates 44. The driver IC U of each substrate 44 may adjust the amount of current flowing to the light sources 51 of each substrate 44 or may block the flow of current, thereby adjusting the brightness of the light sources 51, and as a result, implementing local dimming.

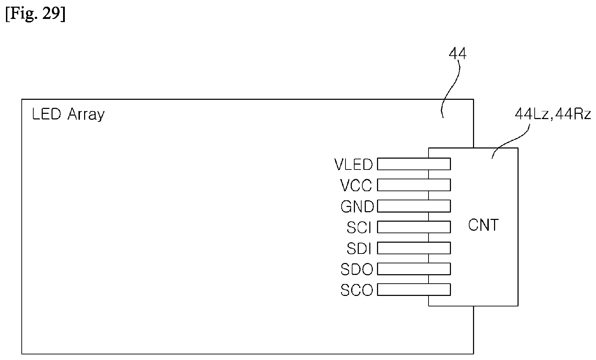

Referring to FIGS. 29 to 32, the connectors 44Lz and 44Rz may use various communication interfaces for communication with the driver IC U of the substrate 44.

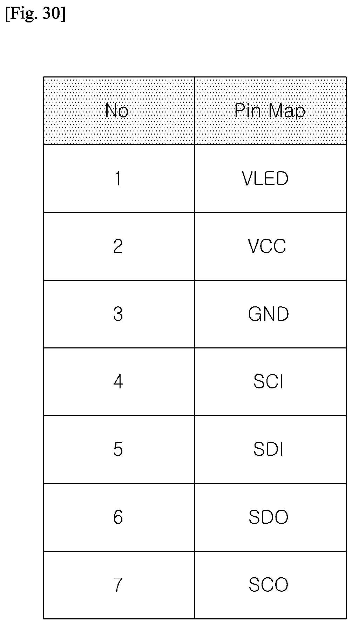

Referring to FIGS. 29 and 30, the connectors 44Lz and 44Rz may use a modified Serial Peripheral Interface (SPI). The connectors 44Lz and 44Rz may include first to seventh pins. A first pin may supply power VLED to the light sources 51 of the substrate 44. A second pin may supply power VCC to the driver IC U of the substrate 44. A third pin may form a ground GND of the driver IC U. The fourth to seventh pins may correspond to Serial Clock Input (SCI), Serial Data Input (SDI), Serial Data Output (SDO), and Serial Clock (SCO), respectively.

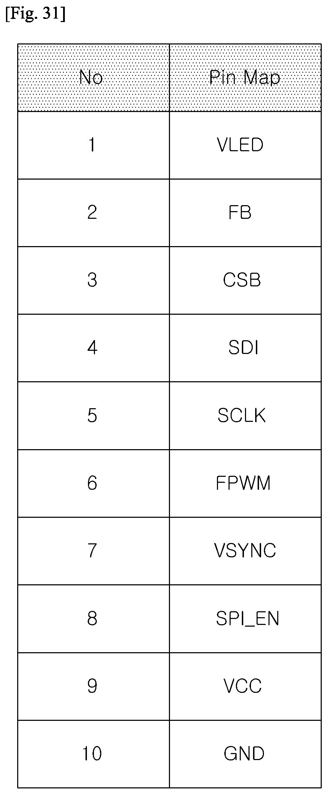

Referring to FIG. 31, the connectors 44Lz and 44Rz may use a Serial Peripheral Interface (SPI). The connectors 44Lz and 44Rz may include first to tenth pins. A first pin may supply power VLED to the light sources 51 of the substrate 44. A ninth pin may supply power VCC to the driver IC U of the substrate 44. A tenth pin may form a ground GND of the driver IC U. The second to eighth pins may correspond to Feedback (FB), Chip Select Bar (CSB), Serial Clock Input (SCI), Serial Clock (SCLK), Forced Pulse Width Modulation (FPWM), Vertical Synchronization (VSYNC), and SPI Enable (SPI_EN), respectively.

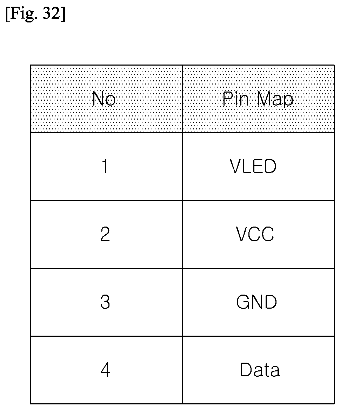

Referring to FIG. 32, the connectors 44Lz and 44Rz may use a one-wire communication interface. The connectors 44Lz and 44Rz may include first to fourth pins. A first pin may supply power VLED to the light sources 51 of the substrate 44. A second pin may supply power VCC to the driver IC U of the substrate 44. A third pin may form a ground GND of the driver IC U. A fourth pin may correspond to data transmission.

Accordingly, the connectors 44Lz and 44Rz may include a specific number of pins. The number of pins may be determined depending on the type of interface used by the connectors 44Lz and 44Rz, and may be determined regardless of the number of local dimming blocks in the substrate 44. In other words, the number of local dimming blocks may increase regardless of the width of the connectors 44Lz and 44Rz. The connectors 44Lz and 44Rz may be commonly used for the substrates including different numbers of local dimming blocks. The driver IC U is mounted on the substrate 44, thereby facilitating interconnection of the lines (circuits) of the substrate 44 connected to the local dimming blocks.

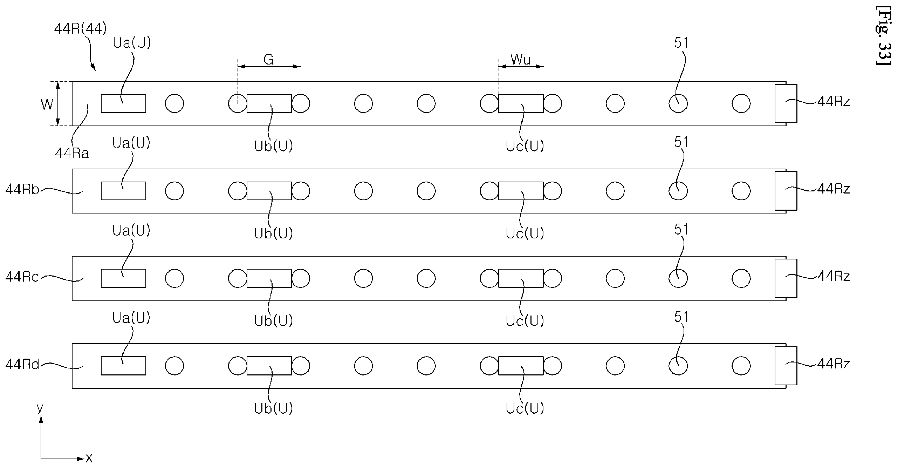

Referring to FIG. 33, the driver IC U may be disposed between the light sources 51 of the substrate 44. The driver IC U may overlap the light sources 51 in a direction in which the light sources 51 are arranged. The light sources 51 and the driver IC U may be arranged in one row. The driver ICs U may be spaced apart from each other with the light source(s) 51 disposed therebetween.

As a pitch G between the light sources 51 decreases, a width Wu for designing (placing) the driver IC U between the light sources 51 may also be reduced. Due to the driver IC U, there may be a limitation in reducing the pitch G between the light sources 51. Due to the driver IC U, there may be a limitation in increasing the number of light sources 51 in the substrate 44 of a specific length. Due to the driver IC U, there may be a limitation in increasing the number of local dimming blocks in the substrate 44 of a specific length.

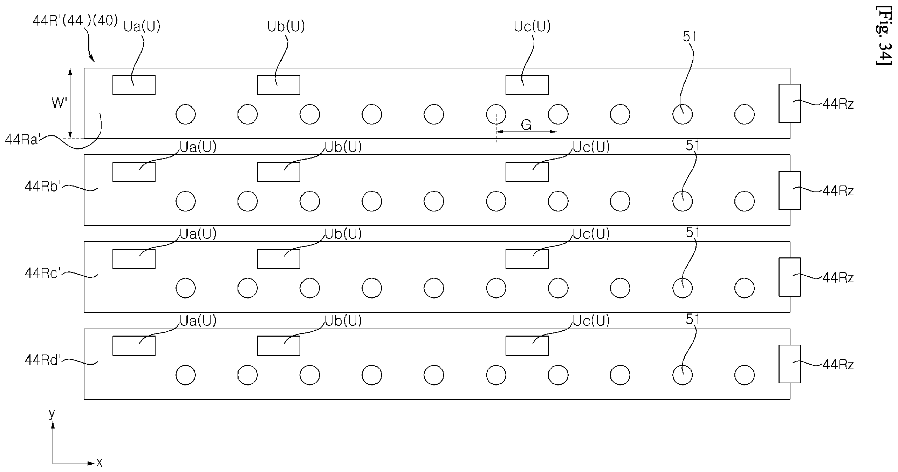

Referring to FIG. 34, a substrate 44' may be connected to the extension board 59 (see FIGS. 24 and 25) through the connector 44Rz instead of the substrate 44 of FIG. 33. The substrate 44' may be a Printed Circuit Board (PCB) on which light sources, such as LEDs, are mounted. For example, the substrate 44' may include at least one of polyethylene terephthalate (PET), glass, polycarbonate (PC), and silicon. The substrate 44' may be referred to as the substrate 40.

The driver IC U may be located outside a line in which the light sources 51 of the substrate 44' are arranged. For example, the driver IC U may not overlap the light sources 51 in a width direction (i.e., vertical direction) of the substrate 44'. The driver IC U may be disposed between the upper side of the substrate 44' and the light sources 51. Alternatively, the driver IC U may also be disposed between the lower side of the substrate 44' and the light sources 51. While being arranged in a row, the driver ICs U may be spaced apart from each other. Alternatively, the driver ICs U may be arranged in different rows.

A decrease in pitch G between the light sources 51 may not be limited by the driver IC U. For example, the pitch G between the light sources 51 may be smaller than the width of the driver IC U. The number of light sources 51 in the substrate 44' of a specific length or the number of local dimming blocks may easily increase compared to the substrate 44 (see FIG. 33).

A width w' of the substrate 44' may be greater than the width W of the substrate 44 (see FIG. 33). That is, in order to place the driver IC U outside the line in which the light sources 51 are arranged, the width of the substrate 44' may increase, such that the manufacturing cost of the substrate 44' may increase.

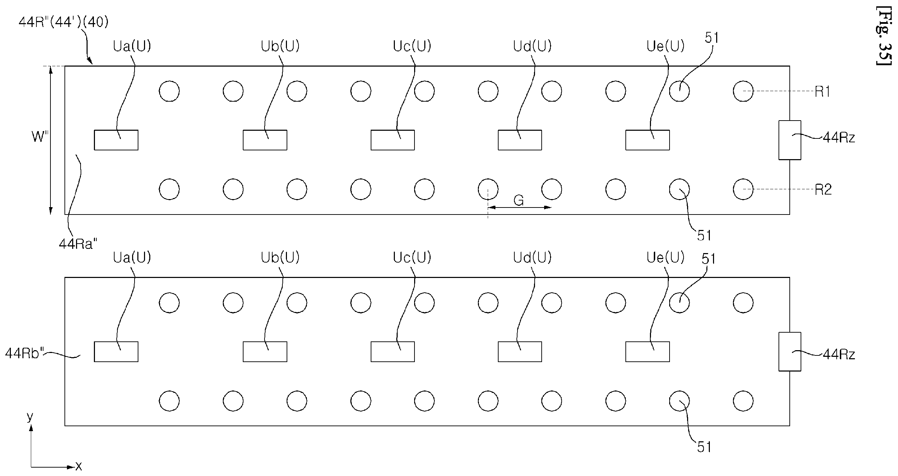

Referring to FIG. 35, a substrate 44" may be connected to the extension board 59 (see FIGS. 24 and 25) through the connector 44Rz instead of the substrate 44' of FIG. 34. The substrate 44" may be a Printed Circuit Board (PCB) on which light sources, such as LEDs, are mounted. For example, the substrate 44" may include at least one of polyethylene terephthalate (PET), glass, polycarbonate (PC), and silicon. The substrate 44" may be referred to as the substrate 40.

The light sources 51 may be arranged in two rows on the substrate 44". The driver IC U may be located outside a line in which the light sources 51 are arranged. For example, the driver IC U may not overlap the light sources 51 in a width direction (i.e., vertical direction) of the substrate 44". The driver IC U may be disposed between the light sources 51 in a first row R1 and the light sources 51 in a second row R2. Alternatively, the driver IC U may also be disposed between the upper side of the substrate 44" and the light sources 51 in the first row R1. Alternatively, the driver IC U may also be disposed between the lower side of the substrate 44" and the light sources 51 in the second row R2. While being arranged in a row, the driver ICs U may be spaced apart from each other. Alternatively, the driver ICs U may be arranged in different rows.

A decrease in pitch G between the light sources 51 may not be limited by the driver IC U. For example, the pitch G between the light sources 51 may be smaller than the width of the driver IC U. The number of light sources 51 in the substrate 44" of a specific length or the number of local dimming blocks may easily increase compared to the substrate 44 (see FIG. 33).

A width w" of each of the substrates 44" may be greater than a sum of the widths W of the substrates 44Ra and 44Rb (see FIG. 33). That is, in order to place the driver IC U outside the line in which the light sources 51 are arranged, the width of the substrate 44" may increase, such that the manufacturing cost of the substrate 44" may increase.

One connector 44Rz may be mounted on the substrate 44" on which 20 light sources 51 are mounted, and may be connected to driver ICs Ua, Ub, Uc, Ud, and Ue of the substrate 44". In comparison, each of the two connectors 44Rz may be mounted on each of the substrates 44Ra and 44Rz (see FIG. 33) on which a total of 20 light sources 51 are mounted, and may be connected to the driver ICs Ua, Ub, and Uc (see FIG. 33) of each of the substrates 44Ra and 44Rb. That is, even when a total number of light sources 51 of the substrates 44" is equal to a total number of light sources 51 of the substrates 44 (see FIG. 33), the number of connectors 44Rz used for the substrates 44" may be half the number of connectors 44Rz used for the substrates 44 (see FIG. 33).

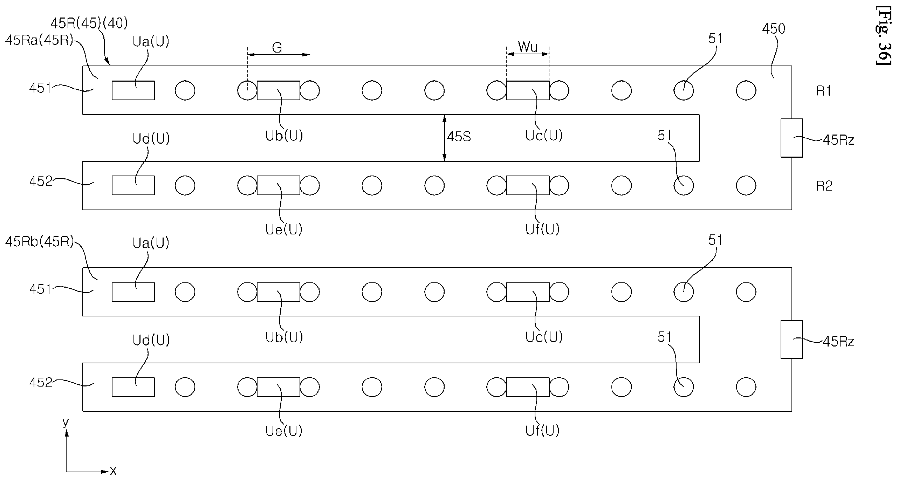

Referring to FIG. 36, a substrate 45 may be connected to the extension board 59 (see FIGS. 24 and 25) through a connector 45Rz instead of the substrate 44" of FIG. 35. The substrate 45 may be a Printed Circuit Board (PCB) on which light sources, such as LEDs, are mounted. For example, the substrate 45 may include at least one of polyethylene terephthalate (PET), glass, polycarbonate (PC), and silicon. The substrate 45 may be referred to as the substrate 40.

The substrate 45 may be in the shape of tongs, a tuning fork, or a chain. The substrate 45 may include a body 450 and legs 451 and 452. The connector 45Rz may be mounted on the body 450 at a position adjacent to one side of the body 450. The legs 451 and 452 may extend horizontally from another side of the body 450 and may be vertically spaced apart from each other. The legs 451 and 452 may be referred to as arms 451 and 452. The light sources 51 may be arranged in two rows on the substrate 45. The light sources 51 in a first row R1 may be arranged along a first leg 451. The light sources 51 in a second row R2 may be arranged along a second leg 452.

For example, the substrate 45 may include 20 light sources 51 and may have a smaller area than an area of the substrate 44" (see FIG. 35) including 20 light sources 51. A difference in area between the substrate 45 and the substrate 44" may correspond to a size of an empty region 45S between the legs 451 and 452 of the substrate 45. Accordingly, the manufacturing cost of the substrate 45 may be lower than the manufacturing cost of the substrate 44".

The driver IC U may be disposed between the light sources 51 of the substrate 45. The driver IC U may overlap the light sources 51 in a direction in which the light sources 51 in the first row R1 are arranged. The light sources 51 in the first row R1 and the driver IC U may be arranged in one row. The driver IC U may overlap the light sources 51 in a direction in which the light sources 51 in the second row R2 are arranged. The light sources 51 in the second row R2 and the driver IC U may be arranged in one row. The driver ICs U may be spaced apart from each other with the light source(s) 51 disposed therebetween.

As a pitch G between the light sources 51 decreases, a width Wu for designing (placing) the driver IC U between the light sources 51 may also be reduced. Due to the driver IC U, there may be a limitation in reducing the pitch G between the light sources 51. Due to the driver IC U, there may be a limitation in increasing the number of light sources 51 in the substrate 44 of a specific length. Due to the driver IC U, there may be a limitation in increasing the number of local dimming blocks in the substrate 44 of a specific length.

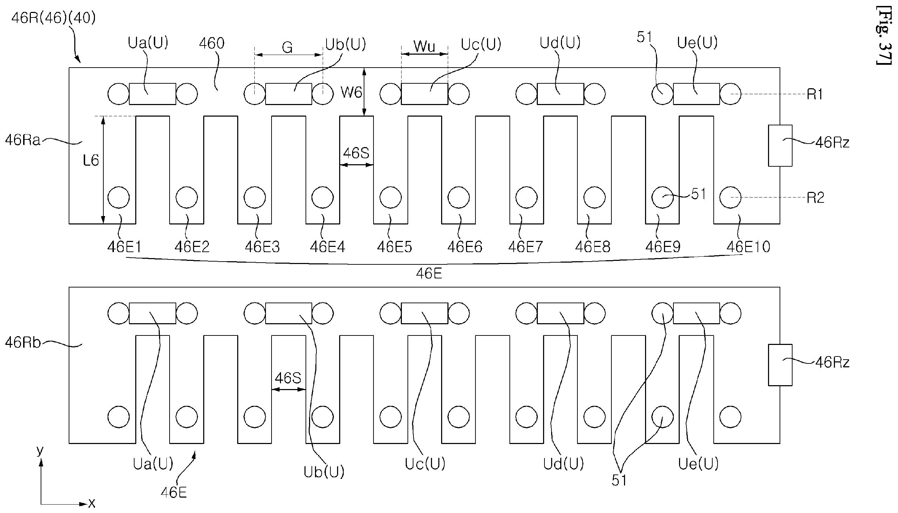

Referring to FIG. 37, a substrate 46 may be connected to the extension board 59 (see FIGS. 24 and 25) through a connector 46Rz instead of the substrate 44" of FIG. 35. The substrate 46 may be a Printed Circuit Board (PCB) on which light sources, such as LEDs, are mounted. For example, the substrate 46 may include at least one of polyethylene terephthalate (PET), glass, polycarbonate (PC), and silicon. The substrate 46 may be referred to as the substrate 40.

The substrate 46 may be in the shape of a comb or a saw blade. The substrate 46 may include a body 460 and legs 46E. The body 460 may be elongated. The legs 46E may extend from one long side of the body 460 in a direction intersecting the body 460 and may be spaced apart from each other in a length direction of the body 460. The length direction of the body 460 may be defined in a horizontal direction, and a length direction of the legs 46E may be defined in the vertical direction. The length of the legs 46E may be smaller than the length of the body 460. The legs 46E may be referred to as arms 46E. The light sources 51 may be arranged in two rows on the substrate 46. The light sources 51 in a first row R1 may be arranged along the body 460. The light sources 51 in a second row R2 may be disposed on the respective legs 46E.

For example, the substrate 46 may include 20 light sources 51 and may have a smaller area than an area of the substrate 44" (see FIG. 35) including 20 light sources 51. A difference in area between the substrate 46 and the substrate 44" may correspond to a sum of areas of empty regions 46S between the substrate 46 and the legs 46E. Accordingly, the manufacturing cost of the substrate 46 may be lower than the manufacturing cost of the substrate 44".

The driver IC U may be disposed between the light sources 51 of the substrate 46. The driver IC U may overlap the light sources 51 in a direction in which the light sources 51 in the first row R1 are arranged. The light sources 51 in the first row R1 and the driver IC U may be arranged in one row. The driver ICs U may be spaced apart from each other with the light source(s) 51 disposed therebetween.

As a pitch G between the light sources 51 decreases, a width Wu for designing (placing) the driver IC U between the light sources 51 may also be reduced. Due to the driver IC U, there may be a limitation in reducing the pitch G between the light sources 51. Due to the driver IC U, there may be a limitation in increasing the number of light sources 51 in the substrate 44 of a specific length. Due to the driver IC U, there may be a limitation in increasing the number of local dimming blocks in the substrate 44 of a specific length.

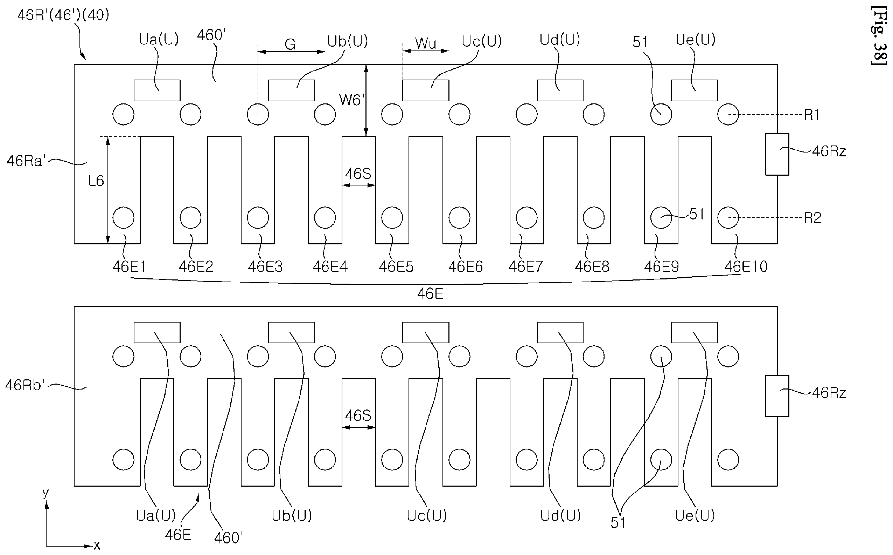

Referring to FIG. 38, a substrate 46' may be connected to the extension board 59 (see FIGS. 24 and 25) through the connector 46Rz instead of the substrate 46 of FIG. 37. The substrate 46' may be a Printed Circuit Board (PCB) on which light sources, such as LEDs, are mounted. For example, the substrate 46' may include at least one of polyethylene terephthalate (PET), glass, polycarbonate (PC), and silicon. The substrate 46' may include legs 46E horizontally spaced apart from each other, and a body 460' extending horizontally to connect the legs 46E. The legs 46E may be referred to as arms 46E. The light sources 51 in the first row R1 may be arranged along the body 460'. The light sources 51 in the second row R2 may be disposed on the respective legs 46E. The substrate 46' may be referred to as the substrate 40.

The driver IC U may be located outside the first row R1 in which the light sources 51 are arranged. For example, the driver IC U may not overlap the light sources 51 in a width direction (i.e., vertical direction) of the substrate 46'. The driver IC U may be disposed between the upper side of the substrate 46' and the first row R1.

A decrease in pitch G between the light sources 51 may not be limited by the driver IC U. For example, the pitch G between the light sources 51 may be smaller than the width of the driver IC U. The number of light sources 51 in the substrate 46' of a specific length or the number of local dimming blocks may easily increase compared to the substrate 46 (see FIG. 37).

A width w6' of the body 460' of the substrate 46' may be greater than a width W6 of the body 460 of the substrate 46 (see FIG. 37). That is, in order to place the driver IC U outside the line in which the light sources 51 are arranged, the width of the body 460' may increase, such that the manufacturing cost of the substrate 46' may increase.

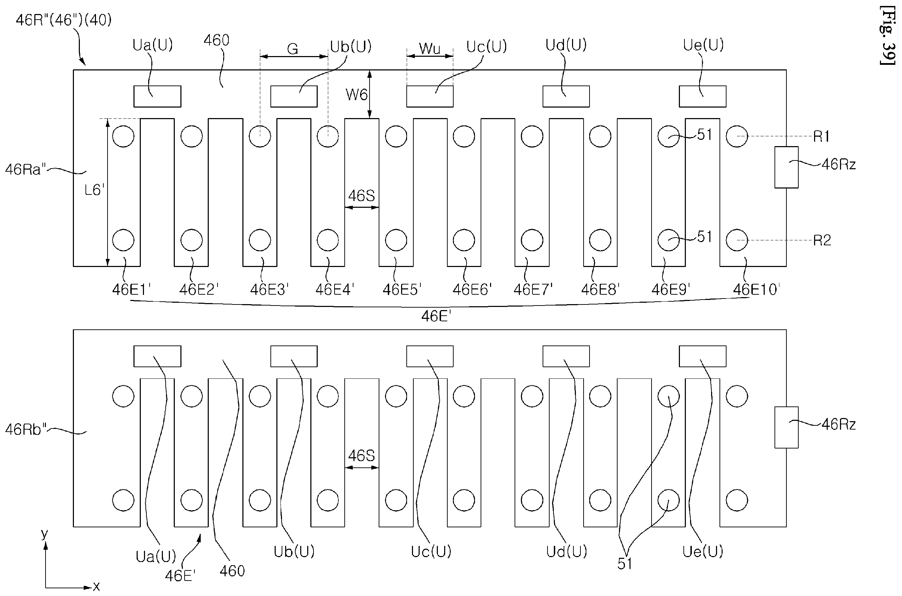

Referring to FIG. 39, a substrate 46" may be connected to the extension board 59 (see FIGS. 24 and 25) through the connector 46Rz instead of the substrate 46 of FIG. 37. The substrate 46" may be a Printed Circuit Board (PCB) on which light sources, such as LEDs, are mounted. For example, the substrate 46" may include at least one of polyethylene terephthalate (PET), glass, polycarbonate (PC), and silicon. The substrate 46" may include a body 460 extending horizontally and legs 46E' extending vertically from the body 460 and horizontally spaced apart from each other. The legs 46E' may be referred to as arms 46E'. The light sources 51 in the first row R1 may be disposed on the respective legs 46E'. Alternatively, the respective light sources 51 in the first row R1 may be disposed at the boundary between the bod 460 and the legs 46E'. The light sources 51 in the second row R2 may be disposed on the respective legs 46E'. The substrate 46" may be referred to as the substrate 40.

The driver IC U may be located outside the first row R1 in which the light sources 51 are arranged. For example, the driver IC U may not overlap the light sources 51 in a width direction (i.e., vertical direction) of the substrate 46". The driver IC U may be disposed on the body 460.

A decrease in pitch G between the light sources 51 may not be limited by the driver IC U. For example, the pitch G between the light sources 51 may be smaller than the width of the driver IC U. The number of light sources 51 in the substrate 46" of a specific length or the number of local dimming blocks may easily increase compared to the substrate 46 (see FIG. 37).

A length L6' of each of the legs 46E' of the substrate 46" may be greater than a length L6 of each of the legs 46E of the substrate 46 (see FIG. 37). That is, in order to place the light sources 51 in the first and second rows R1 and R2 on the legs 46E', the length of the legs 46E' may increase, such that the manufacturing cost of the substrate 46" may increase.

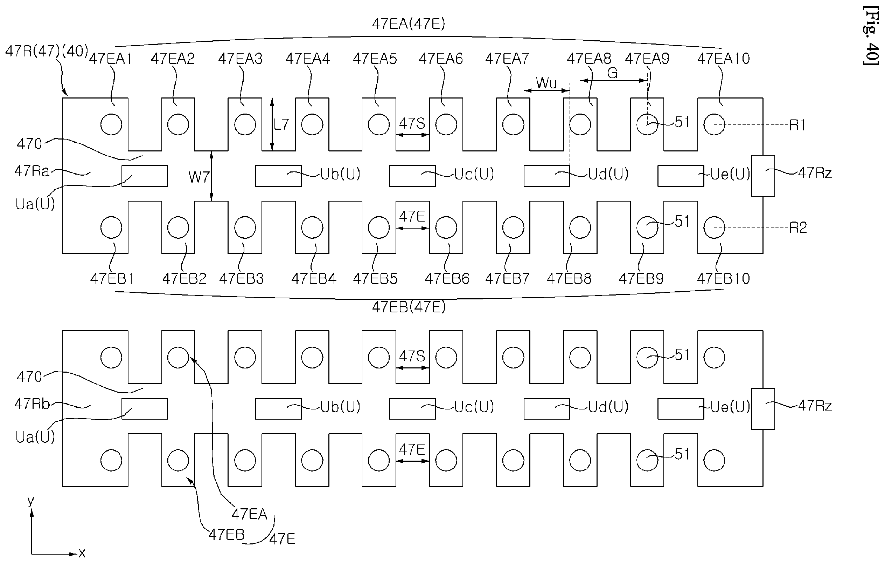

Referring to FIG. 40, a substrate 47 may be connected to the extension board 59 (see FIGS. 24 and 25) through a connector 47Rz instead of the substrate 44" of FIG. 35. The substrate 47 may be a Printed Circuit Board (PCB) on which light sources, such as LEDs, are mounted. For example, the substrate 47 may include at least one of polyethylene terephthalate (PET), glass, polycarbonate (PC), and silicon. The substrate 47 may be referred to as the substrate 40.

The substrate 47 may be in the shape of an antenna or a double-sided saw blade. The substrate 47 may include a body 470 and legs 47E. The body 470 may be elongated. The legs 47E may intersect the body 470 and may be spaced apart from each other along the body 470. The legs 47E may be referred to as arms 47E. The legs 47E may include first legs 47EA extending from a first long side of the body 470 in a direction intersecting the body 470, and second legs 47EB extending from a second long side of the body 470 in a direction intersecting the body 470. The first legs 47EA and the second legs 47EB may be aligned or staggered with each other in a width direction of the body 470. A length direction of the body 470 may be defined in a horizontal direction, and the width direction of the body 470 and a length direction of the legs 46E may be defined in the vertical direction. The length of each of the legs 47E may be smaller than the length of the body 470. The light sources 51 may be arranged in two rows on the substrate 47. The light sources 51 in a first row R1 may be disposed on the respective first legs 47EA. The light sources 51 in a second row R2 may be disposed on the respective second legs 47EB.

For example, the substrate 47 may include 20 light sources 51 and may have a smaller area than an area of the substrate 44" (see FIG. 35) including 20 light sources 51. A difference in area between the substrate 47 and the substrate 44" may correspond to a sum of sizes of empty regions 46S between the legs 47E. Accordingly, the manufacturing cost of the substrate 47 may be lower than the manufacturing cost of the substrate 44".

The driver IC U may be located outside the first row R1 and the second row R2 in which the light sources 51 are arranged. For example, the driver IC U may not overlap the light sources 51 in a width direction (i.e., vertical direction) of the substrate 47. The driver IC U may be disposed between the first row R1 and the second row R2. The driver IC U may be disposed on the body 470. The driver ICs U may be arranged along the body 470.

A decrease in pitch G between the light sources 51 may not be limited by the driver IC U. For example, the pitch G between the light sources 51 may be smaller than the width of the driver IC U. The number of light sources 51 in the substrate 47 of a specific length or the number of local dimming blocks may easily increase compared to the substrate 44" (see FIG. 35).

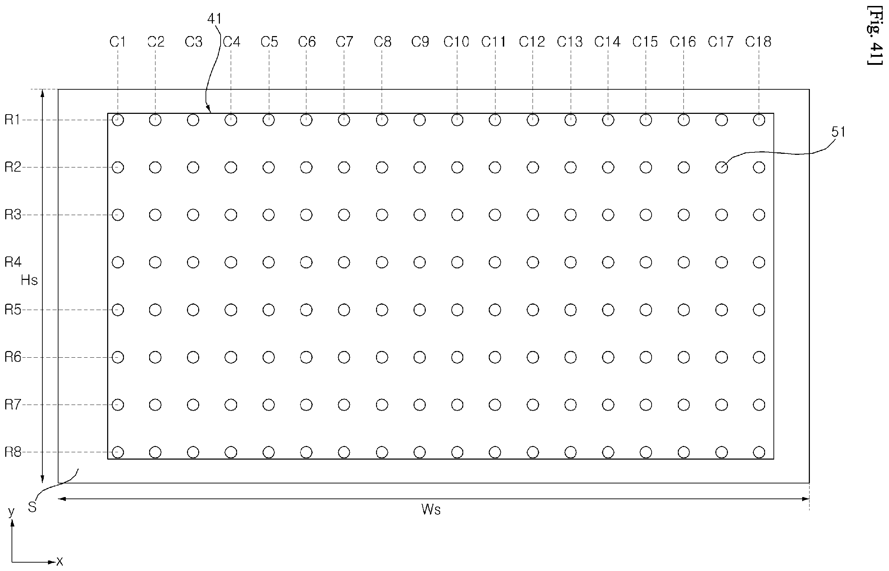

Referring to FIGS. 41 to 43, the areas of the substrates 41, 44", and 47, on which the light sources 51 are mounted, may be compared. The respective substrates 41, 44", and 47 may be formed by cutting a plate S of a specific size. The plate S may have a specific width Ws and a height Hs.

Referring to FIG. 41, a specific number of light sources 51 may be arranged in a matrix form on one substrate 41. The matrix formed by the light sources 51 may be composed of 8 rows R1, R2, R3, R4, R5, R6, R7, and R8 and 18 columns C1, C2, C3, C4, C5, C6, C7, C8, C9, C10, C11, C12, C13, C14, C15, C16, C17, and C18, and a total number of the light sources 51 may be 144. The substrate 41 may be separated from the plate S.

Referring to FIG. 42, 144 light sources 51 may be arranged on the substrates 44". Each of the substrates 44" may have a bar shape. 36 light sources 51 may be arranged in two rows on a first substrate 44Ra". 36 light sources 51 may be arranged in two rows on a second substrate 44Rb". 36 light sources 51 may be arranged in two rows on a third substrate 44Rc". 36 light sources 51 may be arranged in two rows on a fourth substrate 44Rd". The first to fourth substrates 44Ra", 44Rb", 44Rc", and 44Rd" may have the same shape. A sum of areas of the first to fourth substrates 44Ra", 44Rb", 44Rc", and 44Rd" may be smaller than the area of the substrate 41 (see FIG. 41). The substrates 44" separated from the plate S may be spaced apart from each other.

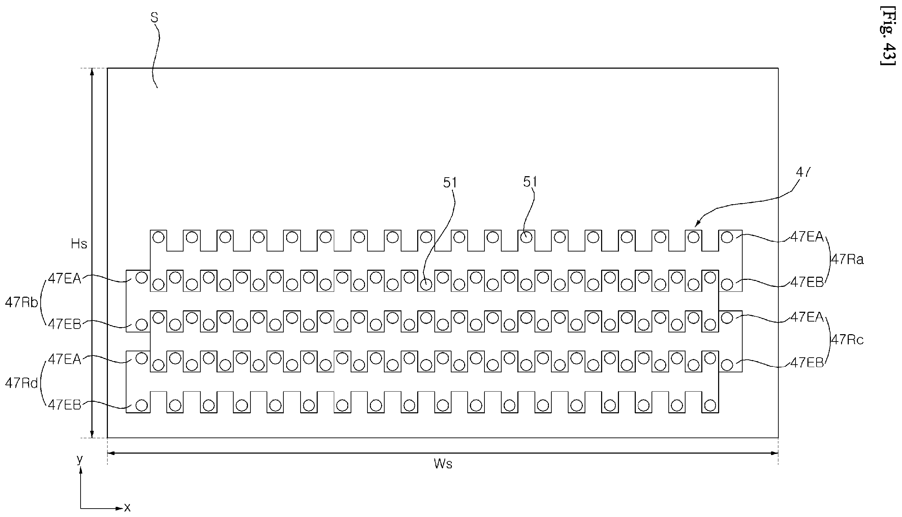

Referring to FIG. 43, 144 light sources 51 may be arranged on the substrates 47. Each of the substrates 47 may be in the shape of an antenna or a double-sided saw blade (see FIG. 40 and the description thereof). 36 light sources 51 may be arranged in two rows on the legs 47EA and 47EB of the first substrate 47Ra. 36 light sources 51 may be arranged in two rows on the legs 47EA and 47EB of the second substrate 47Rb. 36 light sources 51 may be arranged in two rows on the legs 47EA and 47EB of the third substrate 47Rc. 36 light sources 51 may be arranged in two rows on the legs 47EA and 47EB of the fourth substrate 47Rd. The first to fourth substrates 47Ra, 47Rb, 47Rc, and 47Rd may have the same shape. The second legs 47EB of the first substrate 47Ra may be disposed between the first legs 47EA of the second substrate 47Rb, and the second legs 47EB of the second substrate 47Rb may be disposed between the first legs 47EA of the third substrate 47Rc. The second legs 47EB of the third substrate 47Rc may be disposed between the first legs 47EA of the fourth substrate 47Rd. A sum of areas of the first to fourth substrates 47Ra, 47Rb, 47Rc, and 47Rd may be smaller than a sum of areas of the first to fourth substrates 44Ra", 44Rb", 44Rc", and 44Rd". The substrates 47 separated from the plate S may be spaced apart from each other.

Accordingly, the substrate 47 may be more efficient in reducing the manufacturing cost, compared to the substrates 41 and 44".

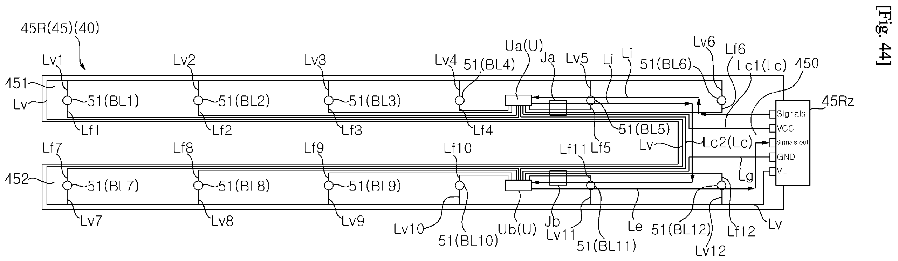

Referring to FIG. 44, the light sources 51 may be arranged along the first leg 451 of the substrate 45 and may mounted on the first leg 451 and the body 450. The light sources 51 may be arranged along the second leg 452 of the substrate 45 and may mounted on the second leg 452 and the body 450. A first driver unit Ua may be disposed between the light sources 51 of the first leg 451 and may be mounted on the first leg 451. A second driver unit Ub may be disposed between the light sources 51 of the second leg 452 and may be mounted on the second leg 452. Lines Lv, Lf1, Lf2, Lf3, Lf4, Lf5, Lf6, Lf7, Lf8, Lf9, Lf10, Lf11, Lf12, Lc, Lg, Li, and Le which will be described below may be circuits disposed on the substrate 45. Jumpers Ja and Jb may connect the lines on the substrate 45.

A power line Lv may be connected to a power pin VL of the connector 45Rz and may be wired along the legs 451 and 452. The power pin VL may provide the power VLED, received from the power supply board P1, to the power line Lv. The power line Lv may be branched into branch lines, the number of which corresponds to the number of local dimming blocks BL1, BL2, BL3, BL4, BL5, BL6, BL7, BL8, BL9, BL10, BL11, and BL12.

A first branch line Lv1 may be connected to the light source 51 forming the first local dimming block BL1. A second branch line Lv2 may be connected to the light source 51 forming the second local dimming block BL2. A third branch line Lv3 may be connected to the light source 51 forming the third local dimming block BL3. A fourth branch line Lv4 may be connected to the light source 51 forming the fourth local dimming block BL4. A fifth branch line Lv5 may be connected to the light source 51 forming the fifth local dimming block BL5. A sixth branch line Lv6 may be connected to the light source 51 forming the sixth local dimming block BL6. The first to sixth local dimming blocks BL1, BL2, BL3, BL4, BL5, and BL6 may be formed on the first leg 451.

A seventh branch line Lv7 may be connected to the light source 51 forming the seventh local dimming block BL7. An eighth branch line Lv8 may be connected to the light source 51 forming the eighth local dimming block BL8. A ninth branch line Lv9 may be connected to the light source 51 forming the ninth local dimming block BL9. A tenth branch line Lv10 may be connected to the light source 51 forming the tenth local dimming block BL10. An eleventh branch line Lv11 may be connected to the light source 51 forming the eleventh local dimming block BL11. A twelfth branch line Lv12 may be connected to the light source 51 forming the twelfth local dimming block BL2. The seventh to twelfth local dimming blocks BL7, BL8, BL9, BL10, BL11, and BL12 may be formed on the second leg 452.

A first line Lf1 may connect the light source 51, connected to the first branch line Lv1, to a first driver unit Ua. A second line Lf2 may connect the light source 51, connected to the second branch line Lv2, to the first driver unit Ua. A third line Lf3 may connect the light source 51, connected to the third branch line Lv3, to the first driver unit Ua. A fourth line Lf4 may connect the light source 51, connected to the fourth branch line Lv4, to the first driver unit Ua. A fifth line Lf5 may connect the light source 51, connected to the fifth branch line Lv5, to the first driver unit Ua. A sixth line Lf6 may connect the light source 51, connected to the sixth branch line Lv6, to the first driver unit Ua.

A seventh line Lf7 may connect the light source 51, connected to the seventh branch line Lv7, to a second driver unit Ub. An eighth line Lf8 may connect the light source 51, connected to the eighth branch line Lv8, to the second driver unit Ub. A ninth line Lf9 may connect the light source 51, connected to the ninth branch line Lv9, to the second driver unit Ub. A tenth line Lf10 may connect the light source 51, connected to the tenth branch line Lv10, to the second driver unit Ub. An eleventh line Lf11 may connect the light source 51, connected to the eleventh branch line Lv11, to the second driver unit Ub. A twelfth line Lf12 may connect the light source 51, connected to the twelfth branch line Lv12, to the second driver unit Ub.

A power pin VCC of the connector 45Rz may be sequentially connected to the first driver unit Ua and the second driver unit Ub through the first line Lc1 and the second line Lc2, and may be connected to a ground pin GND of the connector 45Rz through a line Lg. The first line Lc1 and the second line Lc2 may be collectively referred to as a line Lc. Accordingly, the first driver unit Ua and the second driver unit Ub may be driven with the power provided by the power pin VCC.

A signal pin (Signals) of the connector 45Rz may be sequentially connected to the first driver unit Ua and the second driver unit Ub through the lines Li (see the arrow of FIG. 44), and the second driver unit Ub may be connected to a signal out pin (Signal out) of the connector 45Rz through the line Le. Accordingly, the processor C (see FIGS. 27 and 28) of the extension board 59 may convert (process) the data related to the brightness of the light sources 51 transmitted from the main board P3 and provide the data to the driver ICs U.

The power VLED may be supplied to the first local dimming block BL1 through the first branch line Lv1, and the current having passed through the first local dimming block BL1 may flow to the first driver IC Ua through the first line Lf1. Likewise, the power VLED may be supplied to each of the second to twelfth local dimming blocks BL2, BL3, BL4, BL5, BL6 BL7, BL8, BL9, BL10, BL11, and BL12 through each of the second to twelfth branch lines Lv2, Lv3, Lv4, Lv5, Lv6, Lv7, Lv8, Lv9, Lv10, Lv11, Lv12, and the current having passed through each of the second to twelfth local dimming blocks BL2, BL3, BL4, BL5, BL6 BL7, BL8, BL9, BL10, BL11, and BL12 may flow to the first driver IC Ua or the second driver IC Ub through each of the second to twelfth lines Lf2, Lf3, Lf4, Lf5, Lf6, Lf7, Lf8, Lf9, Lf10, Lf11, and Lf12 and each of the second to sixth pins B2, B3, B4, B5, and B6. The driver ICs Ua and Ub may adjust the amount of current flowing to the light sources 51 belonging to the respective local dimming blocks or may block the flow of current, thereby adjusting the brightness of the light sources 51 belonging to the respective local dimming blocks, and as a result, implementing local dimming.

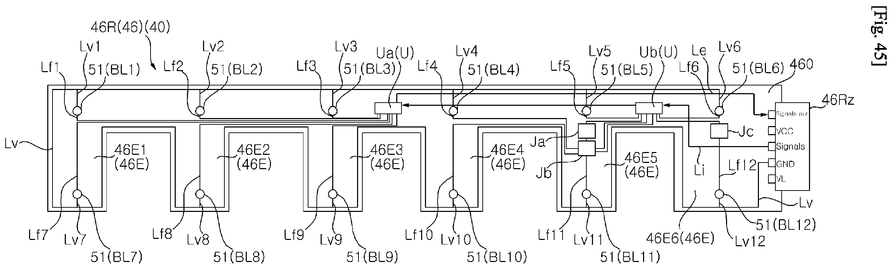

Referring to FIG. 45, the light sources 51 may be arranged along the body 460 of the substrate 46 and may be mounted on the body 460. The respective light sources 51 may be mounted on the respective legs 46E of the substrate 46. The first driver unit Ua and the second driver unit Ub may be disposed between the light sources 51 of the body 460 and may be mounted on the body 460. Lines Lv, Lf1, Lf2, Lf3, Lf4, Lf5, Lf6, Lf7, Lf8, Lf9, Lf10, Lf11, Lf12, Lc, Lg, Li, and Le will be described below may be circuits disposed on the substrate 46. Jumpers Ja, Jb, and Jc may connect the lines on the substrate 46'

The power line Lv may be connected to the power pin VL of the connector 46Rz and may be wired along the legs 451 and 452. The power pin VL may provide the power VLED, received from the power supply board P1, to the power line Lv. The power line Lv may be branched into branch lines, the number of which corresponds to the number of local dimming blocks BL1, BL2, BL3, BL4, BL5, BL6, BL7, BL8, BL9, BL10, BL11, and BL12.

A first branch line Lv1 may be connected to the light source 51 forming the first local dimming block BL1. A second branch line Lv2 may be connected to the light source 51 forming the second local dimming block BL2. A third branch line Lv3 may be connected to the light source 51 forming the third local dimming block BL3. A fourth branch line Lv4 may be connected to the light source 51 forming the fourth local dimming block BL4. A fifth branch line Lv5 may be connected to the light source 51 forming the fifth local dimming block BL5. A sixth branch line Lv6 may be connected to the light source 51 forming the sixth local dimming block BL6. The first to sixth local dimming blocks BL1, BL2, BL3, BL4, BL5, and BL6 may be formed on the body 460.

A seventh branch line Lv7 may be connected to the light source 51 forming the seventh local dimming block BL7. An eighth branch line Lv8 may be connected to the light source 51 forming the eighth local dimming block BL8. A ninth branch line Lv9 may be connected to the light source 51 forming the ninth local dimming block BL9. A tenth branch line Lv10 may be connected to the light source 51 forming the tenth local dimming block BL10. An eleventh branch line Lv11 may be connected to the light source 51 forming the eleventh local dimming block BL11. A twelfth branch line Lv12 may be connected to the light source 51 forming the twelfth local dimming block BL2. The seventh to twelfth local dimming blocks BL7, BL8, BL9, BL10, BL11, and BL12 may be formed on the legs 46E.

A first line Lf1 may connect the light source 51, connected to the first branch line Lv1, to a first driver unit Ua. A second line Lf2 may connect the light source 51, connected to the second branch line Lv2, to the first driver unit Ua. A third line Lf3 may connect the light source 51, connected to the third branch line Lv3, to the first driver unit Ua. A fourth line Lf4 may connect the light source 51, connected to the fourth branch line Lv4, to the second driver unit Ub. A fifth line Lf5 may connect the light source 51, connected to the fifth branch line Lv5, to the second driver unit Ub. A sixth line Lf6 may connect the light source 51, connected to the sixth branch line Lv6, to the second driver unit Ub.

A seventh line Lf7 may connect the light source 51, connected to the seventh branch line Lv7, to the first driver unit Ua. An eighth line Lf8 may connect the light source 51, connected to the eighth branch line Lv8, to the first driver unit Ua. A ninth line Lf9 may connect the light source 51, connected to the ninth branch line Lv9, to the first driver unit Ua. A tenth line Lf10 may connect the light source 51, connected to the tenth branch line Lv10, to the second driver unit Ub. An eleventh line Lf11 may connect the light source 51, connected to the eleventh branch line Lv11, to the second driver unit Ub. A twelfth line Lf12 may connect the light source 51, connected to the twelfth branch line Lv12, to the second driver unit Ub.

A power pin VCC of the connector 45Rz may be sequentially connected to the first driver unit Ua and the second driver unit Ub through the first line Lc1 and the second line Lc2, and may be connected to a ground pin GND of the connector 45Rz through a line Lg (not shown) of the second driver unit Ub. The first line Lc1 and the second line Lc2 may be collectively referred to as a line Lc. Accordingly, the first driver unit Ua and the second driver unit Ub may be driven with the power provided by the power pin VCC.

A signal pin (Signals) of the connector 46Rz may be sequentially connected to the first driver unit Ua and the second driver unit Ub through the lines Li (not shown) (see the arrow of FIG. 45), and the second driver unit Ub may be connected to a signal out pin (signal out) of the connector 46Rz through the line Le. Accordingly, the processor C (see FIGS. 27 and 28) of the extension board 59 may convert (process) the data related to the brightness of the light sources 51 transmitted from the main board P3 and provide the data to the driver ICs U.

The power VLED may be supplied to the first local dimming block BL1 through the first branch line Lv1, and the current having passed through the first local dimming block BL1 may flow to the first driver IC Ua through the first line Lf1. Likewise, the power VLED may be supplied to each of the second to twelfth local dimming blocks BL2, BL3, BL4, BL5, BL6 BL7, BL8, BL9, BL10, BL11, and BL12 through each of the second to twelfth branch lines Lv2, Lv3, Lv4, Lv5, Lv6, Lv7, Lv8, Lv9, Lv10, Lv11, Lv12, and the current having passed through each of the second to twelfth local dimming blocks BL2, BL3, BL4, BL5, BL6 BL7, BL8, BL9, BL10, BL11, and BL12 may flow to the first driver IC Ua or the second driver IC Ub through each of the second to twelfth lines Lf2, Lf3, Lf4, Lf5, Lf6, Lf7, Lf8, Lf9, Lf10, Lf11, and Lf12. The driver ICs Ua and Ub may adjust the amount of current flowing to the light sources 51 belonging to the respective local dimming blocks or may block the flow of current, thereby adjusting the brightness of the light sources 51 belonging to the respective local dimming blocks, and as a result, implementing local dimming.

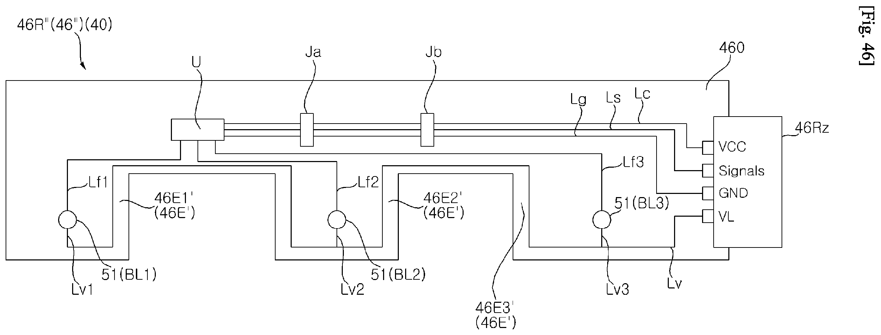

Referring to FIG. 46, the respective light sources 51 may be mounted on the respective legs 46E' of the substrate 46". The driver unit U may be mounted on the body 460 of the substrate 46". Lines Lv, Lf1, Lf2, Lf3, Lc, Lg, and Ls which will be described below may be circuits disposed on the substrate 45. Jumpers Ja and Jb may connect the lines on the substrate 46".

A power line Lv may be connected to a power pin VL of the connector 46Rz and may be wired along the legs 46E'. The power pin VL may provide the power VLED, received from the power supply board P1, to the power line Lv. The power line Lv may be branched into branch lines, the number of which corresponds to the number of local dimming blocks BL1, BL2, and BL3.

A first branch line Lv1 may be connected to the light source 51 forming the first local dimming block BL1. A second branch line Lv2 may be connected to the light source 51 forming the second local dimming block BL2. A third branch line Lv3 may be connected to the light source 51 forming the third local dimming block BL3. The first to third local dimming blocks BL1, BL2, and BL3 may be formed on the legs 46E'.

A first line Lf1 may connect the light source 51, connected to the first branch line Lv1, to a driver unit U. A second line Lf2 may connect the light source 51, connected to the second branch line Lv2, to the driver unit U. A third line Lf3 may connect the light source 51, connected to the third branch line Lv3, to the driver unit U.

A power pin VCC of the connector 456z may be connected to the driver unit U through the line Lc, and may be connected to a ground pin GND of the connector 46Rz through the line Lg. Accordingly, the driver unit U may be driven with the power provided by the power pin VCC.

A signal pin Signals of the connector 46Rz may be connected to the driver unit U through the lines Ls. Accordingly, the processor C (see FIGS. 27 and 28) of the extension board 59 may convert (process) the data related to the brightness of the light sources 51 transmitted from the main board P3 and provide the data to the driver ICs U.

The power VLED may be supplied to the first local dimming block BL1 through the first branch line Lv1, and the current having passed through the first local dimming block BL1 may flow to the first driver IC U through the first line Lf1. Likewise, the power VLED may be supplied to each of the second and third local dimming blocks BL2 and BL3 through each of the second and third branch lines Lv2 and Lv3, and the current having passed through each of the second and third local dimming blocks BL2 and BL3 may flow to the driver IC U through each of the second and third lines Lf2 and Lf3. The driver ICs U may adjust the amount of current flowing to the light sources 51 belonging to the respective local dimming blocks or may block the flow of current, thereby adjusting the brightness of the light sources 51 belonging to the respective local dimming blocks, and as a result, implementing local dimming.

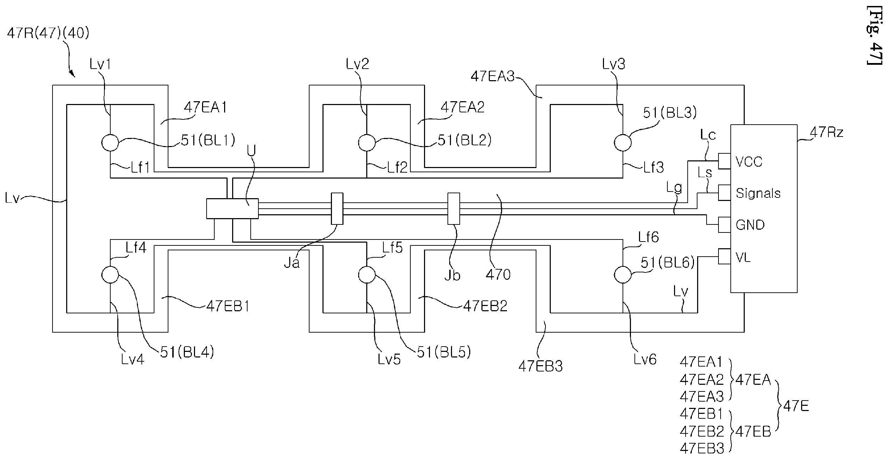

Referring to FIG. 47, the respective light sources 51 may be mounted on the respective legs 47EA of the substrate 47. The respective light sources 51 may be mounted on the respective second legs 47EB. Lines Lv, Lf1, Lf2, Lf3, Lf4, Lf5, Lf6, Lc, Lg, and Ls which will be described below may be circuits disposed on the substrate 45. Jumpers Ja and Jb may connect the lines on the substrate 47.

A power line Lv may be connected to a power pin VL of the connector 46Rz and may be wired along the legs 46E. The power pin VL may provide the power VLED, received from the power supply board P1, to the power line Lv. The power line Lv may be branched into branch lines, the number of which corresponds to the number of local dimming blocks BL1, BL2, BL3, BL4, BL5, and BL6 of the substrate 47.

A first branch line Lv1 may be connected to the light source 51 forming the first local dimming block BL1. A second branch line Lv2 may be connected to the light source 51 forming the second local dimming block BL2. A third branch line Lv3 may be connected to the light source 51 forming the third local dimming block BL3. A fourth branch line Lv4 may be connected to the light source 51 forming the fourth local dimming block BL4. A fifth branch line Lv5 may be connected to the light source 51 forming the fifth local dimming block BL5. A sixth branch line Lv6 may be connected to the light source 51 forming the sixth local dimming block BL6. The first to sixth local dimming blocks BL1, BL2, BL3, BL4, BL5, and BL6 may be formed on the legs 47E.

A first line Lf1 may connect the light source 51, connected to the first branch line Lv1, to a driver unit U. A second line Lf2 may connect the light source 51, connected to the second branch line Lv2, to the driver unit U. A third line Lf3 may connect the light source 51, connected to the third branch line Lv3, to the driver unit U. A fourth line Lf4 may connect the light source 51, connected to the fourth branch line Lv4, to the driver unit U. A fifth line Lf5 may connect the light source 51, connected to the fifth branch line Lv5, to the driver unit U. A sixth line Lf6 may connect the light source 51, connected to the sixth branch line Lv6, to the driver unit U.

A power pin VCC of the connector 47Rz may be connected to the driver unit U through the line Lc, and the driver unit U may be connected to a ground pin GND of the connector 47Rz through a line Lg. Accordingly, the driver unit U may be driven with the power provided by the power pin VCC.

A signal pin Signals of the connector 47Rz may be connected to the driver unit U through the lines Ls. Accordingly, the processor C (see FIGS. 27 and 28) of the extension board 59 may convert (process) the data related to the brightness of the light sources 51 transmitted from the main board P3 and provide the data to the driver ICs U.

The power VLED may be supplied to the first local dimming block BL1 through the first branch line Lv1, and the current having passed through the first local dimming block BL1 may flow to the driver IC U through the first line Lf1. Likewise, the power VLED may be supplied to each of the second to sixth local dimming blocks BL2, BL3, BL4, BL5, and BL6 through each of the second to sixth branch lines Lv2, Lv3, Lv4, Lv5, and Lv6, and the current having passed through each of the second to sixth local dimming blocks BL2, BL3, BL4, BL5, and BL6 may flow to the driver IC U through each of the second to sixth lines Lf2, Lf3, Lf4, Lf5, and Lf6. The driver IC U may adjust the amount of current flowing to the light sources 51 belonging to the respective local dimming blocks or may block the flow of current, thereby adjusting the brightness of the light sources 51 belonging to the respective local dimming blocks, and as a result, implementing local dimming.

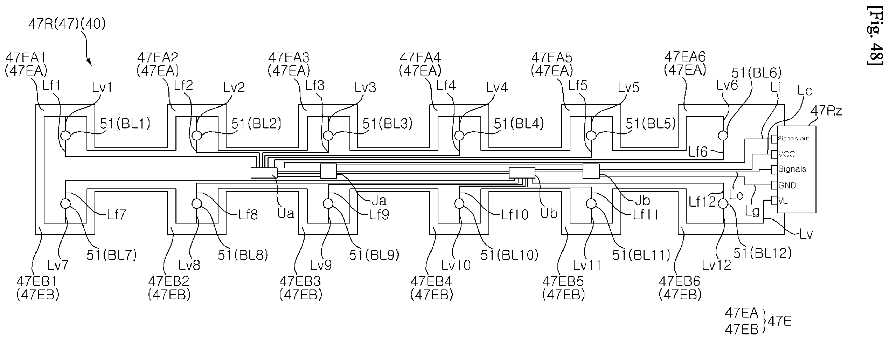

Referring to FIG. 48, the respective light sources 51 may be mounted on the respective first legs 47EA of the substrate 47. Lines Lv, Lf1, Lf2, Lf3, Lf4, Lf5, Lf6, Lf7, Lf8, Lf9, Lf10, Lf11, Lf12, Lc, Lg, Li, and Le which will be described below may be circuits disposed on the substrate 47. Jumpers Ja and Jb may connect the lines on the substrate 47.

A power line Lv may be connected to a power pin VL of the connector 47Rz and may be wired along the legs 451 and 452. The power pin VL may provide the power VLED, received from the power supply board P1, to the power line Lv. The power line Lv may be branched into branch lines, the number of which corresponds to the number of local dimming blocks BL1, BL2, BL3, BL4, BL5, BL6, BL7, BL8, BL9, BL10, BL11, and BL12 of the substrate 47.

A first branch line Lv1 may be connected to the light source 51 forming the first local dimming block BL1. A second branch line Lv2 may be connected to the light source 51 forming the second local dimming block BL2. A third branch line Lv3 may be connected to the light source 51 forming the third local dimming block BL3. A fourth branch line Lv4 may be connected to the light source 51 forming the fourth local dimming block BL4. A fifth branch line Lv5 may be connected to the light source 51 forming the fifth local dimming block BL5. A sixth branch line Lv6 may be connected to the light source 51 forming the sixth local dimming block BL6. The first to sixth local dimming blocks BL1, BL2, BL3, BL4, BL5, and BL6 may be formed on the first legs 47EA.

A seventh branch line Lv7 may be connected to the light source 51 forming the seventh local dimming block BL7. An eighth branch line Lv8 may be connected to the light source 51 forming the eighth local dimming block BL8. A ninth branch line Lv9 may be connected to the light source 51 forming the ninth local dimming block BL9. A tenth branch line Lv10 may be connected to the light source 51 forming the tenth local dimming block BL10. An eleventh branch line Lv11 may be connected to the light source 51 forming the eleventh local dimming block BL11. A twelfth branch line Lv12 may be connected to the light source 51 forming the twelfth local dimming block BL2. The seventh to twelfth local dimming blocks BL7, BL8, BL9, BL10, BL11, and BL12 may be formed on the second legs 47EA.

A first line Lf1 may connect the light source 51, connected to the first branch line Lv1, to a first driver unit Ua. A second line Lf2 may connect the light source 51, connected to the second branch line Lv2, to the first driver unit Ua. A third line Lf3 may connect the light source 51, connected to the third branch line Lv3, to the first driver unit Ua. A fourth line Lf4 may connect the light source 51, connected to the fourth branch line Lv4, to the first driver unit Ua. A fifth line Lf5 may connect the light source 51, connected to the fifth branch line Lv5, to the first driver unit Ua. A sixth line Lf6 may connect the light source 51, connected to the sixth branch line Lv6, to the first driver unit Ua.

A seventh line Lf7 may connect the light source 51, connected to the seventh branch line Lv7, to a second driver unit Ub. An eighth line Lf8 may connect the light source 51, connected to the eighth branch line Lv8, to the second driver unit Ub. A ninth line Lf9 may connect the light source 51, connected to the ninth branch line Lv9, to the second driver unit Ub. A tenth line Lf10 may connect the light source 51, connected to the tenth branch line Lv10, to the second driver unit Ub. An eleventh line Lf11 may connect the light source 51, connected to the eleventh branch line Lv11, to the second driver unit Ub. A twelfth line Lf12 may connect the light source 51, connected to the twelfth branch line Lv12, to the second driver unit Ub.

A power pin VCC of the connector 47Rz may be sequentially connected to the first driver unit Ua and the second driver unit Ub through the line Lc, and may be connected to a ground pin GND of the connector 47Rz through a line Lg. Accordingly, the first driver unit Ua and the second driver unit Ub may be driven with the power provided by the power pin VCC.

A signal pin (Signals) of the connector 47Rz may be sequentially connected to the first driver unit Ua and the second driver unit Ub through the lines Li, and the first driver unit Ua may be connected to a signal out pin (signal out) of the connector 47Rz through the line Le. Accordingly, the processor C (see FIGS. 27 and 28) of the extension board 59 may convert (process) the data related to the brightness of the light sources 51 transmitted from the main board P3 and provide the data to the driver ICs U.

The power VLED may be supplied to the first local dimming block BL1 through the first branch line Lv1, and the current having passed through the first local dimming block BL1 may flow to the first driver IC Ua through the first line Lf1. Likewise, the power VLED may be supplied to each of the second to twelfth local dimming blocks BL2, BL3, BL4, BL5, BL6 BL7, BL8, BL9, BL10, BL11, and BL12 through each of the second to twelfth branch lines Lv2, Lv3, Lv4, Lv5, Lv6, Lv7, Lv8, Lv9, Lv10, Lv11, Lv12, and the current having passed through each of the second to twelfth local dimming blocks BL2, BL3, BL4, BL5, BL6 BL7, BL8, BL9, BL10, BL11, and BL12 may flow to the first driver IC Ua or the second driver IC Ub through each of the second to twelfth lines Lf2, Lf3, Lf4, Lf5, Lf6, Lf7, Lf8, Lf9, Lf10, Lf11, and Lf12. The driver ICs Ua and Ub may adjust the amount of current flowing to the light sources 51 belonging to the respective local dimming blocks or may block the flow of current, thereby adjusting the brightness of the light sources 51 belonging to the respective local dimming blocks, and as a result, implementing local dimming.

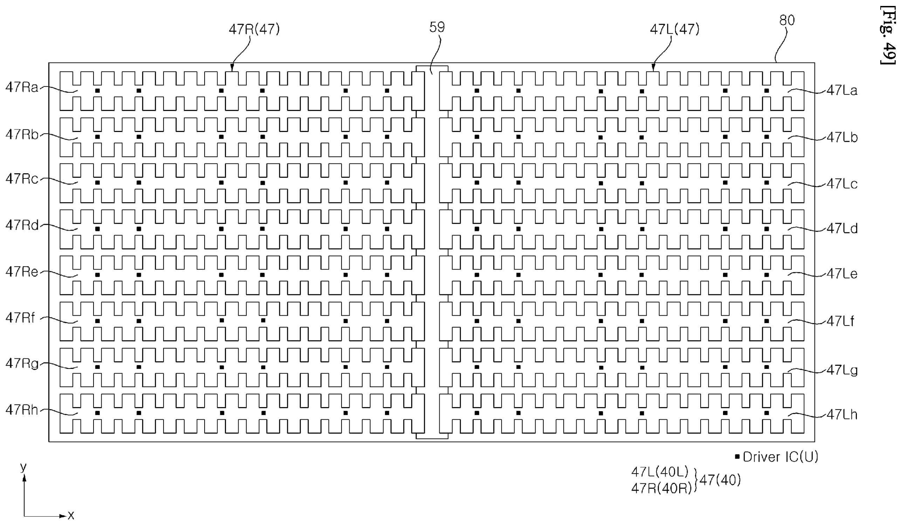

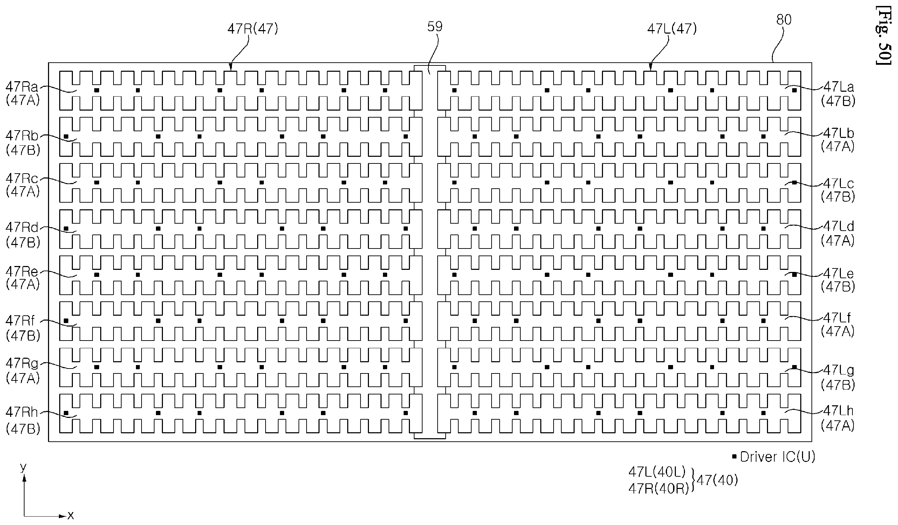

Referring to FIGS. 49 and 50, the extension board 59 may be elongated vertically. A plurality of first substrates 47L and a plurality of second substrates 47R may extend horizontally and may be electrically connected to the extension board 59. The first substrates 47L may be arranged along the left side of the extension board 59, and the second substrates 47R may be arranged along the right side of the extension board 59. The first substrates 47L may be referred to as the first substrate 40L and the second substrates 47R may be referred to as the second substrate 40R.

The driver IC U may be disposed on each of the substrates 47L and 47R. A plurality of driver ICs U may be disposed on each of the substrates 47L and 47R and may be spaced apart from each other.

Referring to FIG. 49, the substrates 47L and 47R may be a single type of substrates. That is, the substrates 47L and 47R may have the same shape, and the locations of driver ICs U of the substrates 47L and 47R may be the same as each other. In this case, the driver ICs U of the first substrates 47L may be arranged vertically, and the driver ICs U of the second substrates 47R may also be arranged vertically.

Referring to FIG. 50, the substrates 47L and 47R may be two types of substrates. A substrate 47A of a first type and a substrate 47B of a second type may have the same shape, but the location of the driver IC U of the substrate 47A of the first type may be different from the location of the driver IC U of the substrate 47B of the second type. The substrates 47A of the first type and the substrates 47B of the second type, which constitute the first substrates 47L, may be arranged alternately with each other. In this case, the driver ICs U of the first substrates 47L may be arranged vertically in a zigzag manner. The substrates 47A of the first type and the substrates 47B of the second type, which constitute the second substrates 47R, may be arranged alternately with each other. In this case, the driver ICs U of the second substrates 47R may be arranged vertically in a zigzag manner.

Accordingly, the driver ICs U of FIG. 50 may be spread widely over the entire substrates 47L and 47R, compared to the driver ICs U of FIG. 49. That is, the arrangement of the driver ICs of FIG. 50 may be more efficient in reducing the temperature of the driver ICs U than the arrangement of the driver ICs of FIG. 49.

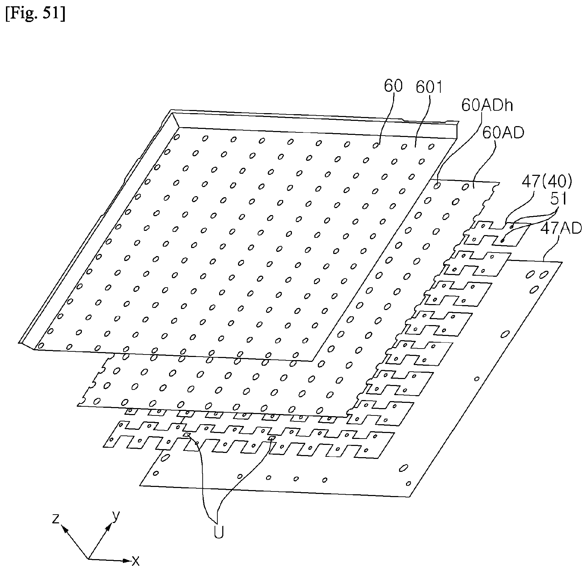

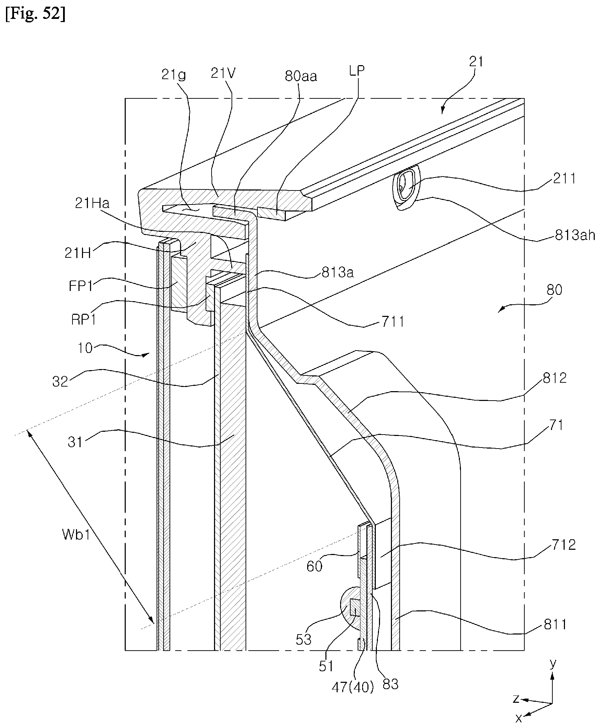

Referring to FIGS. 51 and 52, a rear surface of the substrate 47 may be attached to the front surface of the frame 80 or the heat sink 83 by an adhesive sheet 47D. The adhesive sheet 47D may be double-sided tape. A rear surface of the reflective sheet 60 may be attached to the front surface of the substrate 47 by an adhesive sheet 60AD. The adhesive sheet 60AD may be double-sided tape. The light sources 51 on the substrate 47 may be located in holes 60ADh of the adhesive sheet 60AD and holes 601 of the reflective sheet 60. The reflective sheet 60 may cover the driver ICs U on the substrate 47.

Light from the light sources 51 may be provided to the display panel 10 through the diffusion plate 31 and the optical sheet 32. The lenses 53 may cover the light sources 51, and may be attached to the front surface of the substrate 47 and disposed in the holes 60ADh and 601. The lenses 53 may include at least one of silicone, polymethyl methacrylate (PMMA), and polycarbonate (PC). Light from the light sources 51 may be refracted or reflected by the lenses 53 to spread over a wider beam angle than the light sources 51. The reflective sheet 60 may reflect the light provided by the light sources 51 or light reflected from the diffusion plate 31 in a forward direction.

Meanwhile, the side frame 20 may include a first part 21, a second part 22, a third part 34, and a fourth part 24 (see FIG. 2). The first part 21 may extend along the upper side of the display panel 10, the second part 22 may extend along the lower side of the display panel 10. The third part 23 may extend along the left side of the display panel 10, and the fourth part 24 may extend along the right side of the display panel 10. Each of the first to fourth parts 21, 22, 23, and 24 may include a vertical portion and a horizontal portion. A vertical portion 21V of the first part 21 may cover the upper side of the display panel 10 and the upper side of the frame 80. A horizontal portion 21H of the first part 21 may intersect the vertical portion 21V, and may be disposed between the display panel 10 and the optical sheet 32. A front pad FP1 may be attached to the rear surface of the display panel 10 and the front surface of the horizontal portion 21H. A rear pad RP1 may be attached to the rear surface of the horizontal portion 21H and the front surface of the optical sheet 32. Accordingly, the side frame 20 may protect the edges of the display panel 10.

Referring to FIGS. 1 to 52, a display device 1 may include: a display panel 10; a frame 80 positioned behind the display panel 10; a main board P3 coupled to the frame 80; a plurality of substrates 40 disposed between the display panel 10 and the frame, the plurality of substrates 40 coupled to the frame 80; a plurality of light sources 51 mounted on each of the plurality of substrates 40; a driver chip U mounted on each of the plurality of substrates 40; an extension board 59 electrically connected to the plurality of substrates 40; and a cable F3 electrically connecting the main board P3 to the extension board 59.

The extension board 59 may include a processor C configured to process data related to brightness of the light sources 51 of the main board P3 and configured to provide the data to the driver chip U.

The display device 1 may further include a power supply board P1 coupled to the frame 80; and a cable F1 electrically connecting the power supply board P1 to the extension board 59.

The main board P3 and the power supply board P1 may be coupled to a rear of the frame 80, wherein the frame 80 may include a hole 81i through which the cable F connected to the main board P3 and the cable F1 connected to the power supply board P1 pass.

The plurality of light sources 51 may be grouped into a plurality of local dimming blocks for each of the plurality of substrates 40, wherein the driver chip U may control a flow of current passing through the plurality of local dimming blocks.

The extension board 59 may be elongated, and the plurality of substrates 40 may extend in a direction intersecting the extension board 59 and may be spaced apart from each other along the extension board 59.

The plurality of substrates 40 may include: first substrates 40L adjacent to one long side of the extension board 59 and coupled to the extension board 59, the first substrates 40L extending in a direction intersecting the extension board 59; and second substrates 40R adjacent to another long side of the extension board 59 and coupled to the extension board 59, the second substrates 40R extending in a direction intersecting the extension board 59.

The plurality of substrates 40 may include: a first substrate; a second substrate spaced apart from the first substrate; and a third substrate opposite the first substrate with respect to the second substrate, wherein the driver chip U of the first substrate, the driver chip U of the second substrate, and the driver chip U of the third substrate may be arranged in a zigzag manner in a length direction of the extension board 59.

The first substrate and the third substrate may be substrates of a first type, and the second substrate may be a substrate of a second type different from the first type.

The substrate 46'' may include: a body 460 which is elongated; and legs 46E' extending from one long side of the body 460 in a direction intersecting the body 460, the legs 46E' spaced apart from each other along the body 460, wherein each of the light sources 51 may be mounted on each of the legs 46E', and the driver chip U may be mounted on the body 460.

The substrate 47 may include: a body 470 which is elongated; first legs 47EA extending from one long side of the body 470 in a direction intersecting the body 470, the first legs 47EA spaced apart from each other along the body 470; and second legs 47EB extending from another long side of the body 470 in a direction intersecting the body 470, the second legs 47EB spaced apart from each other along the body 470, wherein the light sources 51 may include light sources 51 in a first row R1 mounted on each of the first legs 47EA, and light sources 51 in a second row R2 mounted on each of the second legs 47EB, wherein the driver chip U may be mounted on the body 470.

A pitch G between the light sources 51 may be smaller than a width Wu of the driver chip U.

The driver chip U may include a plurality of driver chips U which are spaced apart from each other along the body 470.

The plurality of driver chips U may include: a first driver chip Ua configured to control brightness of the light sources in the first row R1; and a second driver chip Ub configured to control brightness of the light sources in the second row R2.

The display device 1 may further include a reflective sheet 60 covering the plurality of substrates 40, the reflective sheet 60 having a plurality of holes 601 in which the plurality of light sources 51 are located, wherein the reflective sheet 60 may cover the driver chip U.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The above detailed description should not be construed as restrictive in all respects and should be considered as illustrative. The scope of the present disclosure should be determined by a reasonable interpretation of the appended claims, and all modifications within the equivalent scope of the present disclosure are included in the scope of the present disclosure.

## Claims

1. A display device comprising:
a display panel;
a frame positioned behind the display panel;
a main board coupled to the frame;
a plurality of substrates disposed between the display panel and the frame, the plurality of substrates coupled to the frame;
a plurality of light sources mounted on each of the plurality of substrates;
a driver chip mounted on each of the plurality of substrates;
an extension board electrically connected to the plurality of substrates; and
a cable electrically connecting the main board to the extension board.

2. The display device of claim 1, wherein the extension board comprises a processor processing data related to brightness of the light sources of the main board and providing the data to the driver chip.

3. The display device of claim 1, further comprising:
a power supply board coupled to the frame; and
a cable electrically connecting the power supply board to the extension board.

4. The display device of claim 3, wherein the main board and the power supply board are coupled to a rear of the frame,
wherein the frame comprises a hole through which the cable connected to the main board and the cable connected to the power supply board pass.

5. The display device of claim 1, wherein the plurality of light sources are grouped into a plurality of local dimming blocks for each of the plurality of substrates,
wherein the driver chip controls a flow of current passing through the plurality of local dimming blocks.

6. The display device of claim 1, wherein the extension board is elongated,
wherein the plurality of substrates extend in a direction intersecting the extension board and are spaced apart from each other along the extension board.

7. The display device of claim 6, wherein the plurality of substrates comprise:
first substrates adjacent to one long side of the extension board and coupled to the extension board, the first substrates extending in a direction intersecting the extension board; and
second substrates adjacent to another long side of the extension board and coupled to the extension board, the second substrates extending in a direction intersecting the extension board.

8. The display device of claim 6, wherein the plurality of substrates comprise:
a first substrate;
a second substrate spaced apart from the first substrate; and
a third substrate opposite the first substrate with respect to the second substrate, wherein the driver chip of the first substrate, the driver chip of the second substrate, and the driver chip of the third substrate are arranged in a zigzag manner in a length direction of the extension board.

9. The display device of claim 8, wherein the first substrate and the third substrate are substrates of a first type,
wherein the second substrate is a substrate of a second type different from the first type.

10. The display device of claim 1, wherein the substrate comprises:
a body which is elongated; and
legs extending from one long side of the body in a direction intersecting the body, the legs spaced apart from each other along the body,
wherein each of the light sources is mounted on each of the legs,
wherein the driver chip is mounted on the body.

11. The display device of claim 1, wherein the substrate comprises:
a body which is elongated;
first legs extending from one long side of the body in a direction intersecting the body, the first legs spaced apart from each other along the body; and
second legs extending from another long side of the body in a direction intersecting the body, the second legs spaced apart from each other along the body,
wherein the light sources comprise:
light sources in a first row mounted on each of the first legs;
light sources in a second row mounted on each of the second legs,
wherein the driver chip is mounted on the body.

12. The display device of claim 11, wherein a pitch between the light sources is smaller than a width of the driver chip.

13. The display device of claim 11, wherein the driver chip comprises a plurality of driver chips which are spaced apart from each other along the body.

14. The display device of claim 13, wherein the plurality of driver chips comprise:
a first driver chip configured to control brightness of the light sources in the first row; and
a second driver chip configured to control brightness of the light sources in the second row.

15. The display device of claim 1, further comprising a reflective sheet covering the plurality of substrates, the reflective sheet having a plurality of holes in which the plurality of light sources are positioned,
wherein the reflective sheet covers the driver chip.
